# EUROPEAN PATENT APPLICATION

(11) **EP 1 667 146 A1**
(43) Date of publication of application: **07.06.2006**
(21) Application number: 04772665.8
(22) Date of filing: 26.08.2004
(51) Int. Cl.: G11B 20/10, G11B 20/12, G06F 3/06, G06F 12/14, H04N 5/91

(54) **INFORMATION PROCESSING SYSTEM, INFORMATION PROCESSING METHOD, COMPUTER PROGRAM EXECUTED IN INFORMATION PROCESSING SYSTEM**

(30) Priority: 26.08.2003 JP 2003300886
(71) Applicant: MATSUSHITA ELECTRIC INDUSTRIAL CO., LTD., Kadoma-shi, Osaka 571-8501 (JP)
(72) Inventor: MURAKI, Kenji, Matsushita Elect. Ind. Co., Ltd., Shiromi, Chuo-ku, Osaka 540-6319 (JP); ISHIHARA, Hideshi, Matsushita El. Ind. Co., Ltd., Shiromi, Chuo-ku, Osaka 540-6319 (JP)
(74) Representative: Grünecker, Kinkeldey, Stockmair & Schwanhäusser Anwaltssozietät
(86) International application number: PCT/JP2004/012711
(87) International publication number: WO 2005/020234

(57) **Abstract**

An information processing system includes a stream getting section for getting a data stream representing a content and a recording processing section for generating output control information and writing the data stream and the output control information on a medium. The output control information defines an appropriate output method, which is compatible with the output format of the content, following a rule that defines what type of processing should be done according to the type of input source of the content and the output format of the content and in accordance with source related information on the input source of the content. By reference to the output control information, a device that is going to play back the content from this medium can output the content without considering its input source.

## Description

### TECHNICAL FIELD

The present invention relates to the processing of storing a content, to which the access is controlled for the purpose of copyright protection, on a storage medium and the processing of reading such a content from the storage medium.

### BACKGROUND ART

Recently, as more and more audiovisual appliances have adopted digital information technology, it is now possible to transmit and copy a content without debasing its quality. However, if contents that are still under copyright protection were transmitted and copied unlimitedly, then the copyright holders' rights might be infringed. That is why audiovisual appliances for recording and/or playing those contents are now required to have a copyright protection function.

Various types of digital audio appliances for CDs, DATs and MDs have been put on the market one after another since 1980s. As a result, a copy control function was developed for the purpose of copyright protection. For example, Serial Copy Management System (SCMS) is a copy control technique that has been used extensively in digital audio equipment since 1980s. According to the SCMS technique, copy control information, as well as a content, is stored on a medium such as a CD, an MD or a broadcast wave, and when the content is copied either within the same housing or between multiple different appliances that are connected together through a digital interface, the recorder determines, by the copy control information of that content, whether the content may be copied or not. The SCMS has achieved a reasonable success in MD and other consumer audio recorders.

However, the copy control information of the SCMS is digital data that is stored independently of the content and can be easily nullified by using a personal computer (PC), for example. Besides, an analog transmission cannot transfer the copy control information or be the object of copy control.

In view of these problems of the SCMS, information recorders and players for providing copyright protection by using encryption technology have been developed. Also, to transfer data securely between those devices or between digital broadcast receivers, Digital Transmission Content Protection (DTCP) has been used as a secure transmission system that adopts device authentication and encryption techniques.

Hereinafter, the device disclosed in Japanese Patent Application Laid-Open Publication No. 2003-59176 will be described as an exemplary conventional recorder/player.

### 1. Configuration of recorder/player

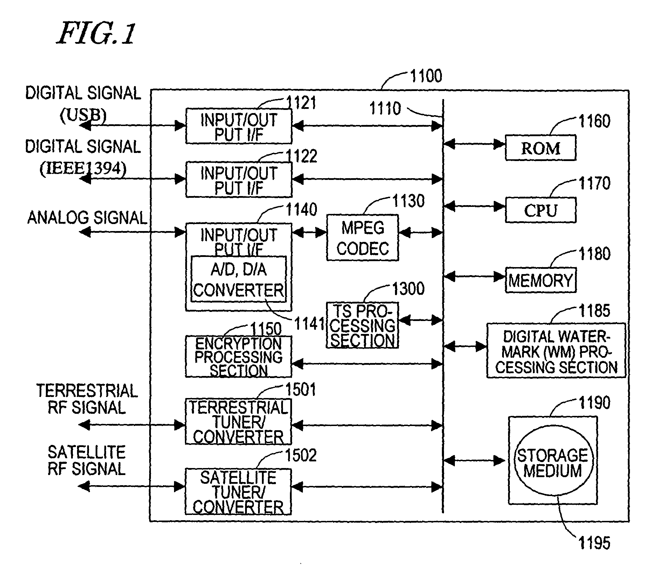

FIG. 1 shows an arrangement of functional blocks in a conventional recorder/player 1100. The recorder/player 1100 includes a USB-compatible input/output interface (I/F) 1121, an IEEE 1394-compatible input/output interface (I/F) 1122, an MPEG (Moving Picture Experts Group) codec 1130, an analog data processible input/output interface (I/F) 1140 with an A/D, D/A converter **1141,** an encryption processing section **1150,** a ROM (read-only memory) **1160,** a CPU (central processing unit) **1170,** a memory **1180,** a drive **1190** for a storage medium **1195,** a transport stream (TS) processing section **1300,** a digital watermark (WM) processing section **1185,** a terrestrial tuner/converter **1501** for receiving a terrestrial RF signal, and a satellite tuner/converter **1502** for receiving a satellite RF signal. These components are connected together via a bus **1110.**

The input/output I/Fs **1121** and **1122** receive digital signals, representing various contents such as video, audio and programs that have been provided externally through USB and IEEE 1394 buses, respectively, and output those signals onto the bus **1110.** Also, these input/output I/Fs **1121** and **1122** receive digital signals on the bus **1110** and output them to external devices. The MPEG codec **1130** performs MPEG decoding on the MPEG encoded data that has been supplied through the bus **1110** and outputs it to the input/output I/F **1140.** Also, the MPEG codec **1130** performs MPEG encoding on the digital signal that has been supplied from the input/output I/F **1140** and then outputs it onto the bus **1110.** The input/output I/F **1140** has the A/D, D/A converter **1141** built in. The input/output I/F **1140** receives an analog signal as an externally provided content, gets it A/D (analog-to-digital) converted by the A/D, D/A converter **1141,** and then outputs it as a digital signal to the MPEG codec **1130.** Also, the input/output I/F **1140** gets a digital signal, supplied from the MPEG codec **1130,** D/A (digital-to-analog) converted by the A/D, D/A converter **1141** and then outputs it as an analog signal to an external device.

The encryption processing section **1150** may be implemented as a single chip LSI (large scale integrated circuit), encrypts or decodes a digital signal that has been supplied as a content through the bus **1110,** and then outputs the signal onto the bus **1110.** It should be noted that the encryption processing section **1150** does not have to be a single-chip LSI but may also be implemented by multiple different software programs or hardware components.

The ROM **1160** stores thereon a leaf key, which is a device key given as a unique identifier to a recorder/player or to a group of recorders/players, and a node key, which is a device key shared by a plurality of recorders/players or multiple groups. The ROM **1160** also stores information about the digital watermark generation of the recorder/player.

The CPU **1170** performs the program stored in the memory **1180,** thereby controlling the MPEG codec **1130** and the encryption processing section **1150.** Also, the CPU **1170** carries out the processing of generating copyright information along with the encryption processing section **1150,** for example. The memory **1180** may be a nonvolatile memory, for example, to store the program carried out by the CPU 1170 and the data required to operate the CPU **1170.** Furthermore, the memory **1180** stores output control rule data for respective input sources as will be described later.

The drive **1190** drives the storage medium **1195,** from/on which digital data can be read and written, thereby reading the digital data from the storage medium **1195** and outputting it onto the bus **1110** and writing digital data, supplied through the bus **1110,** onto the storage medium **1195.** Alternatively, the program may be stored on the ROM **1160** and the device key may be stored on the memory **1180.**

The storage medium **1195** is a medium that can store digital data thereon and may be an optical disk such as a DVD or a CD, a magneto-optical disk, a magnetic disk such as an HD, a magnetic tape, or a semiconductor memory such as a RAM. The storage medium **1195** may be built in the recorder/player **1100.** In this example, however, the storage medium **1195** is supposed to be insertable into, and removable from, the drive **1190.**

The transport stream processing section (which will be referred to herein as a "TS processing section") 1300 retrieves a transport packet representing a particular program (or content) from a transport stream (which will be referred to herein as a "TS") in which a number of TV programs (contents) have been multiplexed together. The TS processing section 1300 performs data processing to store the timing of appearance of the TS retrieved, along with respective packets, on the storage medium 1195 and also performs appearance timing control processing while reading it from the storage medium **1195.**

To each packet of the TS, an arrival time stamp (ATS) is added as a piece of information specifying its timing of appearance. The timing of appearance is determined during encoding so as not to break down a transport stream system target decoder (T-STD), which is a virtual decoder defined by the MPEG-2 Systems. While the TS is being played back, the timing of appearance is controlled by reference to the ATS added to each transport packet. These controls are performed by the TS processing section **1300.**

For example, in recording a transport packet on the storage medium **1195** such as a DVD, the TS processing section **1300** adds an arrival time stamp (ATS), representing the input timing of each transport packet, to the transport packet and records it as a source packet with a narrowed interval. By additionally storing the timing of appearance of each transport packet on the storage medium, the output timing of each packet can be controlled during the playback.

The encryption processing section **1150** performs encryption processing on the contents that are included in the TS to which the ATS has been added. The contents that have been subjected to the encryption processing are stored on the storage medium **1195.** Also, the encryption processing section **1150** performs the process of decoding the encrypted contents that are stored on the storage medium **1195.**

The digital watermark (WM) processing section **1185** embeds copy control information as a digital watermark in a content to be stored on the storage medium or detects the embedded digital watermark from a content to be read from the storage medium. Optionally, the processing section **1185** may rewrite the copy control information and then embed it as a digital watermark.

On the storage medium **1195**, stored are various types of identification data, encryption key, and other types of secret information, including a stamper ID that is given to each stamper when a disk is manufactured, a disk ID given as a unique ID to each individual disk, a content ID given as a unique ID to each single content, and a key for use in encryption processing.

If encrypted, those various types of secret information stored on the storage medium **1195** are decoded by the encryption processing section **1150.** And an encryption key for use in recording or playing back a content on/from the storage medium is generated based on the information decoded. The secret information is used only when the encryption processing section 1150 generates a content encryption key so that the secret information does not leak to an outsider.

In FIG. 1, the encryption processing section **1150,** TS processing section **1300** and digital watermark processing section **1185** are shown as three different blocks to make them easily understandable. However, these sections may be implemented as one or a plurality of LSIs that performs these functions. Also, any of these functions may be realized by a combination of multiple software programs or hardware components.

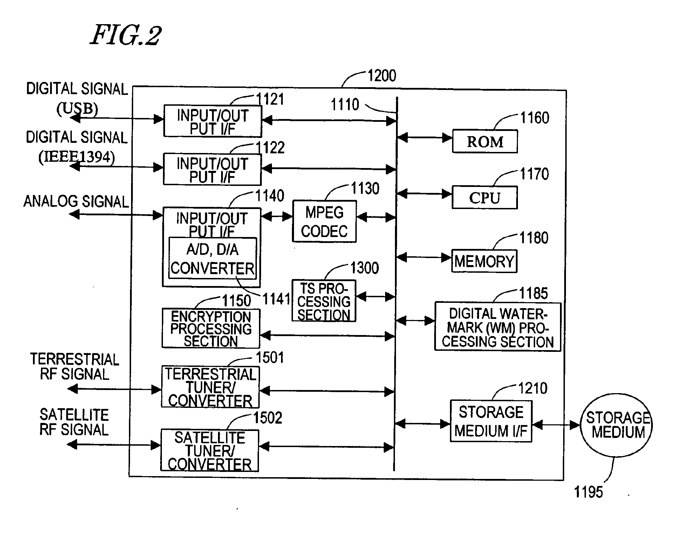

Another conventional recorder/player may have the configuration shown in FIG. 2 instead of that shown in FIG. 1. FIG. 2 shows an arrangement of functional blocks in another conventional recorder/player **1200.** Unlike the recorder/player **1100,** the recorder/player **1200** has a storage medium **1195** that is insertable into, and removable from, a storage medium interface (I/F) **1210** as a drive. The storage medium **1195** may also be loaded into another type of recorder/player so as to read and/or write data by using that recorder/player. The other components of the recorder/player **1200** are the same as, and are identified by the same reference numerals as, the counterparts of the recorder/player **1100** and the description thereof will be omitted herein.

### 2. Recording/playback processing

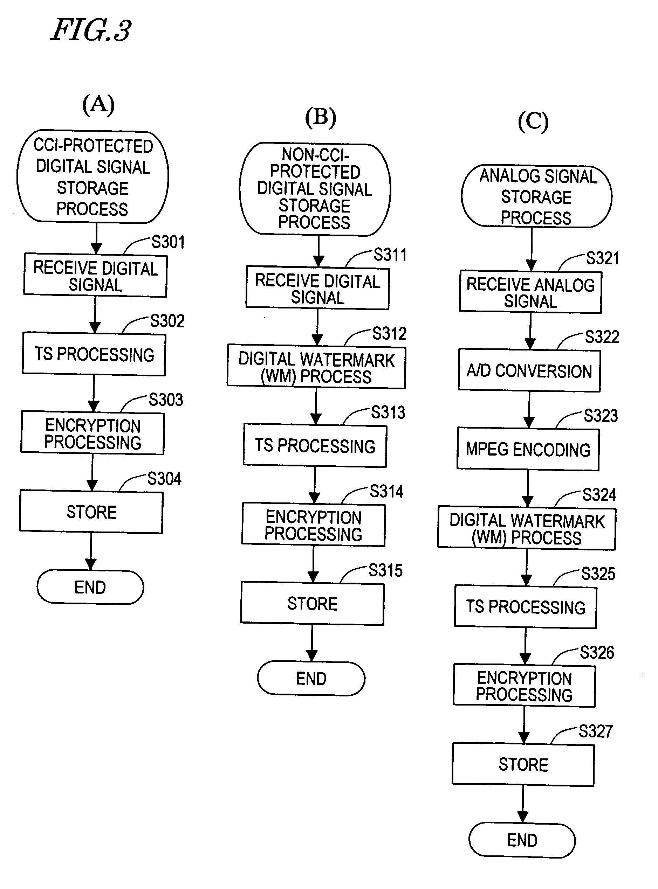

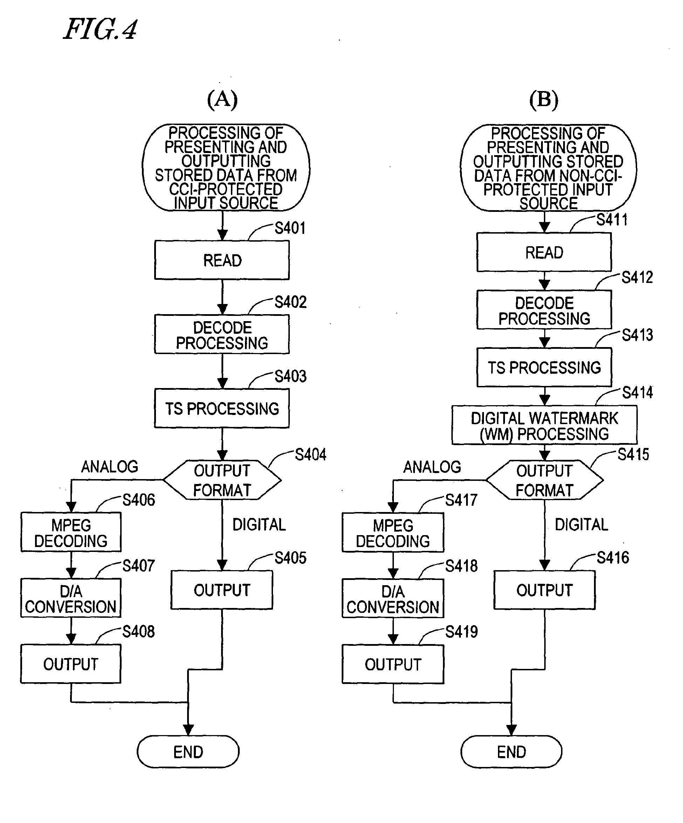

Hereinafter, it will be described with reference to the flowcharts shown in FIGS. **3(A)** to **3(C)** and FIGS. **4(A)** and **4(B)** how the recorder/player performs data recording and playback processes. The following processing may be carried out by either the recorder/player **1100** shown in FIG. 1 or the recorder/player **1200** shown in FIG. 2. In the following description, however, the processing is supposed to be performed by the recorder/player **1100.**

In recording a content, represented by an external digital signal, on the storage medium **1195,** recording processing is carried out following the flowcharts shown in FIGS. **3(A)** and **3(B).** FIG. **3(A)** shows how to process a digital signal that is protected by copy control information (CCI). FIG. **3(B)** shows how to process a digital signal that is not protected by the copy control information (CCI). These processes were proposed in 5C-DTCP (Digital Transmission Content Protection) system, which had been submitted as a joint proposal by five corporations.

The procedure shown in FIG. **3(A)** will be described. When a content represented by a digital signal (which will be referred to herein as a "digital content") is supplied to the input/output I/F **1122** by way of an IEEE (Institute of Electrical and Electronics Engineers) 1394 serial bus, for example, the input/output I/F **1122** receives the incoming digital content in Step **S301** and outputs it to the TS processing section 1300 through the bus **1110.**

In Step **S302,** the TS processing section **1300** generates block data by adding an arrival time stamp (ATS) to each of the transport packets of the TS and then outputs it to the encryption processing section **1150** by way of the bus **1110.**

Next, in Step S303, the encryption processing section **1150** performs encryption processing on the digital content received, and then outputs the resultant encrypted content to either the drive **1190** or the storage medium I/F **1210** by way of the bus **1110.** The encrypted content gets recorded on the storage medium **1195** by either the drive **1190** or the storage medium I/F **1120** (in Step **S304**) to end the recording processing.

Five Company Digital Transmission Content Protection (5C-DTCP) was established as a standard for protecting a digital content being transmitted between multiple devices that are connected together via an IEEE 1394 serial bus. According to this standard, if a digital content is not copy free, then a sender and recipient authenticate each other to see if they can handle copy control information (CCI) properly to control copying. After that, the sender encrypts the digital content and transmits it. In response, the recipient decodes the encrypted digital content (which will be sometimes referred to herein as an "encrypted content"), performs processing in accordance with the copy control information (CCI) and carries out the processing of updating the copy control information (CCI).

As the copy control information (CCI) defined by the DTCP, information of two bits is added to a transport packet to indicate that the data with this additional information is "copy free" (i.e., can be copied an unlimited number of times), "copy one generation" (i.e., can be copied in only one generation) or "copy never" (i.e., may not be copied at all). According to the CGMS system, two-bit information "00" represents "copy free", "10" represents "copy one generation" and "11" represents "copy never".

If the recorder/player **1100** complies with the DTCP, then the recorder/player **1100** determines, by the CCI of the input information, whether the given content can be stored (copied) or not, and performs a type of processing according to the result of the decision. For example, if the CCI added to the input content is "11" (copy never), then the recorder/player **1100** never performs the processing of storing the content on the storage medium. On the other hand, if the CCI added to the input content is "10" (copy one generation), then the recorder/player **1100** rewrites the CCI into "11" (copy never) just before storing the content, and performs the processing of storing the content.

In transmitting and receiving data so as to comply with the DTCP, the input/output I/F **1122** on the data receiving end receives the encrypted content in Step S301 by way of the IEEE 1394 serial bus, decodes the encrypted content in accordance with the TCP, and then outputs it as a plain text to the encryption processing section **1150.**

The encryption of the digital content compliant with the DTCP is done by generating a key that changes with time and using that key. The encrypted digital content, as well as the key that was used to encrypt it, is transmitted through the IEEE 1394 serial bus, and then decoded on the receiving end by using the key included there. More exactly, according to the DTCP, the initial value of the key and a flag representing a time to change the keys for use to encrypt the digital content are included in the encrypted content. And on the receiving end, the initial values of the key included in the encrypted content are changed at the time represented by the flag that is also included in the encrypted content, thereby generating the key that was used for encryption and decoding the encrypted content. In this case, an encrypted content may be regarded as including a key to decode the content. Thus, this way of thinking will be adopted in the following description, too. As for the DTCP, its general information is disclosed at the website identified by the URL (uniform resource locator) http://www.dtcp.com.

Next, the procedure shown in FIG. **3(B)** will be described. FIG. **3(B)** shows how to process a digital signal that is not protected by the copy control information (CCI) proposed by the 5C-DTCP system. When a content represented by a digital signal (which will be referred to herein as a "digital content") is supplied either to the input/output I/F **1121** by way of the USB bus or to the input/output I/F **1122** by way of the IEEE 1394 bus, for example, the input/output I/F **1121** or **1122** receives the incoming digital content in Step **S311** and then outputs it to the digital watermark processing section **1185** through the bus **1110.**

The digital watermark processing section **1185** detects the copy control information, which is embedded as digital watermark (WM) in the incoming content, and carries out a type of processing in accordance with the copy control information. The digital watermark may be embedded in a content in the following manner. Specifically, first, when a content is produced, a primary mark is generated as the copy information of the original content. The primary mark may be 2-bit information such as "11" (copy never), "10" (copy one generation) and "00" (copy free). When making a copy, the recorder/player 1100 adds a one-bit value "1", which is called a "copy mark", to the primary mark "10", generates a value "110" and embeds that value as a digital watermark in the content, thereby showing that this content is a copy. If the primary mark is "00" (copy free), there is no need to add any copy mark. And if the primary mark is "11" (copy never), then the recorder makes no copies at all since copying is prohibited. In this manner, a copy of a given content is made in accordance with the copy control information embedded as digital watermarks.

However, some devices can process digital watermarks but others cannot. Those may be classified into devices of the following three generations:
1^{st} generation: devices that can neither detect nor embed digital watermarks;
2^{nd} generation: devices that can only detect digital watermarks (and can also detect primary marks but cannot add copy marks) ; and
3^{rd} generation: devices that can both detect and embed digital watermarks (and can also detect primary marks and add copy marks).

The devices of these three generations perform mutually different processes.

Referring back to FIG. **3(B),** the digital watermarks are processed in Step **S312,** and then output to the TS processing section **1300** in Step **S313.**

The processes done by the TS processing section **1300** include the processing of setting copy control information (CCI) for TS stream data to be stored on a storage medium. In FIG. **3(B),** however, the input data is a digital signal, which has not been controlled in accordance with the CCI, and therefore, the CCI added to the input data may be unreliable. In that case, in accordance with the copy control information derived from the digital watermark that has been detected in the digital watermarking processing step **S312,** CCI is newly set on the stream data that is going to be stored on the storage medium.

That is to say, if non-CCI-protected data has been input, it is determined, by the digital watermark of the input information, whether the content may be stored (i.e., copied) or not, and an appropriate type of processing is carried out based on the result of the decision. For example, if the digital watermark embedded in the incoming content is "11" (copy never), no process of storing the content on the storage medium is carried out. On the other hand, if the digital watermark that has been set for the incoming content is "10" (copy one generation), then the TS processing section 1300 carries out the process of storing the content with the CCI defined to be "11" (copy never) after the storage of the content.

In this manner, in processing non-CCI-protected data, the CCI in the TS is defined by the digital watermark (WM).

The processing steps **S314** and **S315** that follow are the same as the processing steps **S303** and **S304** shown in FIG. **3(A).** In a device in which the digital watermark can be embedded, a content, in which updated copy control information is embedded as the digital watermark, is stored on the storage medium.

Next, the process of recording a content, represented by an external analog signal, on the storage medium **1195** will be described with reference to FIG. **3(C),** which shows the procedure of the analog signal writing process. When a content represented by an analog signal (i.e., an analog content) is supplied to the input/output I/F **1140,** the input/output I/F **1140** receives that analog content in Step **S321** and then the process advances to Step **S322.** In Step **S322,** the analog content is A/D converted by the built-in A/D, D/A converter **1141** into a content represented by a digital signal (i.e., a digital content).

This digital content is supplied to the MPEG codec **1130,** subjected to MPEG encoding (i.e., encoding process by MPEG compression) and then supplied to the encryption processing section **1150** through the bus **1110** in Step **S323.**

The processing steps **S324**, **S325** and **S326** are respectively the same as the processing steps **S312, S313** and **S314** shown in FIG. **3(B).** That is to say, a digital watermark is detected and updated by the digital watermark processing section **1185,** an ATS is added by the TS processing section **1300** to the transport packet, the CCI (copy control information) is added in accordance with the digital watermark detected, and an encryption process is carried out by the encryption processing section **1150.** The encrypted content, obtained as a result of these processing steps, is recorded on the storage medium **1195.** Then, the recording process ends.

The recorder/player **1100** performs an appropriate type of processing according to the input source of a given content, thereby recording the content on a storage medium. If the method of transmitting the copy control information (CCI) of the given content is already defined and if that information is protected (e.g., when the content is input through an IEEE 1394 bus under the 5C-DTCP or as a satellite or terrestrial digital telecast), then the CCI of the content to be recorded is detected in accordance with the definition. On the other hand, if the given content has been input through an IEEE 1394 bus without protecting the content or CCI under the 5C-DTCP or if the given content is an analog input, then the digital watermark of the input content being recorded needs to be detected continuously to define the CCI of that content. As a result, when the CCI is fixed, the process of stopping the recording may need to be performed. That is to say, if the copy control information derived from the digital watermark detection information indicates "copy never", then the content recording needs to be stopped.

The recorder/player **1100** also records copyright information on the storage medium in association with the content. Examples of this copyright information includes input source information, the digital watermark generation information (i.e., the first, second and third generations described above) of the recorder, information about respective recording modes, the strictest copy control information (i.e., title-by-title copy control information) among various pieces of content CCI, a corresponding packet number as a piece of information about the copy control information change point in the recorded content, and copy control information at the change point. Among these various pieces of information, at least one piece of information is defined as the copyright information and stored on the storage medium.

Hereinafter, the title-by-title copy control information will be described. Generally speaking, various types of copy control information are defined as a mixture for a given content. For example, a single content may include "copy never" portions, "copy free" portions and "copy one generation" portions. And the strictest copy control information, which has been selected from these various types of copy control information detected as one with the strictest conditions, is defined as the title-by-title copy control information and may be stored on the storage medium in association with the content. The strictness of the copy control imposed by the copy control information decreases in the order of "copy never", "copy one generation" and "copy free".

The recorder/player **1100** also stores a title key on the storage medium in association with the content to be recorded on the storage medium, and carries out an encryption process using the title key. As used herein, the "title key" is one of the keys needed to perform an encryption process and is generated for each title, which is defined for each single content. If a content to be recorded on the storage medium and associated with a single title key includes two types of copy control information "copy one generation" and "copy free", then "copy one generation" is defined as the title-by-title copy control information. If copy never is included in the content to be recorded, then "copy never" is defined as the title-by-title copy control information. Only when the content to be recorded is copy free, "copy free" is defined as the title-by-title copy control information.

Next, the process of playing back a content from the storage medium **1195** and outputting it either as an analog content or as it is (i.e., as a digital content) will be described with reference to FIGS. **4(A)** and **4(B),** which show the procedures of the content playback and output processes. The playback process is modified according to the input source information included within the copyright information, which is stored on the storage medium in association with the content to be played back, or whether the title-by-title copy control information is stored or not. The input source information shows which input source the content has come from.

If the title-by-title copy control information is stored, then the recorder/player 1100 determines, by the title-by-title copy control information, how to process the content (i.e., what type of copy control should be imposed on the content) and also determines whether the content may be played back or not. On the other hand, if no title-by-title copy control information is stored, then the recorder/player 1100 performs a playback process while detecting the digital watermark and determines based on the result whether the content may be played back or not. If the answer is YES, the content is output following the rule defined for each individual input source. Generally speaking, unless a given content is copy free, the content needs to be protected during its output. A digital content may be output while CCI is being defined for a TS under the 5C-DTDP, for example. On the other hand, an analog content may be output while a Macrovision signal is being added to the content, for example. As for a video signal, by using the additional information of a CGMS method (which will be referred to herein as "CGMS information") and the difference of the AGC method, an AGC pulse signal (i.e., a pseudo sync signal used for deterring copies in the Macrovision method), which disables normal use of a copied video signal, is added to the video signal and then the video signal with the AGC pulse signal is output.

FIG. **4(A)** shows the procedure of processing of reading data, which has been input from a CCI-protected input source and then stored on a storage medium, from the storage medium and outputting that data.

First, in Step **S401,** the drive **1190** or the storage medium I/F **1210** reads the encrypted content and copyright information, associated with the encrypted content, from the storage medium **1195.** As described above, the copyright information includes at least one type of information selected from the group consisting of the input source information, the digital watermark generation information of the recorder, information about respective recording modes, title-by-title copy control information, a corresponding packet number as a piece of information about the copy control information change point in the recorded content, and copy control information at the change point. Based on these pieces of information, the recorder/player **1100** determines whether or not the content may be played back and output. If the answer is YES, the encrypted content is output to the encryption processing section **1150** through the bus **1110.**

Next, in Step **S402**, the encryption processing section **1150** decodes the encrypted content that has been supplied from the drive **1190** or the storage medium I/F **1210.** The decoded data is output to the TS processing section **1300** by way of the bus **1110.**

Subsequently, in Step **S403**, the TS processing section **1300** determines the output timings by the ATS of respective transport packets that form the TS, carries out a control according to the ATS, and then supplies them to the input/output I/F **1120** by way of the bus **1110.** Also, the TS processing section **1300** detects the copy control information (CCI) from the TS and performs a control operation in accordance with the CCI.

Thereafter, in Step **S404,** the TS processing section 1300 determines whether the output has an analog format or a digital format. If it is a digital output, then the TS processing section **1300** outputs the digital content to an external device by way of the digital input/output I/Fs **1121** and **1122** to end the playback process.

If the input/output I/F **1122** outputs a digital content through an IEEE 1394 serial bus in Step **S405,** then the sender device and receiver device authenticate each other so as to comply with the DTCP standard as described above and then the digital content is encrypted and transmitted.

On the other hand, if an analog content is output, then the digital content decoded by the encryption processing section **1150** is supplied to the MPEG codec **1130** by way of the bus **1110.**

In Step **S406,** the MPEG codec **1130** subjects the digital content to MPEG decoding (i.e., expansion process) and then supplies it to the input/output I/F **1140.** In Step **S407,** the input/output I/F **1140** gets the digital content, which has been MPEG decoded by the MPEG codec **1130**, D/A converted (**S425**) by the built-in A/D, D/A converter **1140** into an analog content. Thereafter, the process advances to Step **S408,** in which the input/output I/F **1140** outputs the analog content to an external device to end the playback process.

On the other hand, FIG. **4(B)** shows the procedure of processing of reading data, which has been input from a non-CCI-protected input source and then stored on a storage medium, from the storage medium and then outputting the data. In this processing, the playback control is carried out based on the copy control information acquired by detecting the digital watermark of the content, not the CCI added to the block data in the TS.

The difference between the processing procedures shown in FIGS. **4(B)** and **4(A)** lies in that the digital watermark (WM) processing step **S414** is carried out in FIG. **4(B)** after the TS has been processed in Step **S413.** As used herein, the digital watermark (WM) processing is a process in which the digital watermark is detected from the data of the content to be played back, copy control information is read from the digital watermark, and then a playback control is carried out based on the digital watermark read. For example, if a digital watermark indicating "copy never" has been detected, control is carried out such that no playback with an external output is performed.

As described above, the recorder/player 1100 stores copyright information on a storage medium while recording a content on the storage medium, and gets the copyright information about a content to be played back and carries out a control operation in accordance with various types of information in the copyright information while playing back the content.

### 3. Copyright information

Next, input source information to be stored as the copyright information will be described. As used herein, the "input source information" shows the input source of a content to be recorded. For example, the input source information indicates that the content to be recorded has come from an input source compliant with the 5C-DTCP mentioned above or is a satellite broadcast content transmitted through a BS or a CS, a terrestrial digital content or a terrestrial analog content.

The input source information further includes information showing whether or not it is a content with copy control information that has been input through an IEEE 1394 interface and information showing whether it is digital input data or analog input data. These pieces of information are identifiable by an input interface through which the data has been input. The input source information preferably further includes information that clearly shows what type of copy control information has been provided for a given content, e.g., whether or not the input content has copy control information compliant with the 5C-DTCP (more specifically, copy control information added to TS packets as digital data or copy control information added as a digital watermark). As for digital data that has been input so as to be compliant with the 5C-DTCP and a content that has been broadcast via BS or CS, a configuration for broadcasting the type of the copy control information as additional information for a content has already been realized or is being researched. Thus, the recorder/player can get the details of the copy control information from such additional information.

It will be described why the input source information is stored as copyright information. Specifically, since the rule to handle a given content may be different from one input source to another, information about what type of input source the content has come from needs to be acquired during a playback process and used as information that determines the output mode and controls the playback during the playback process. For example, according to a content protection standard such as the 5C-DTCP, a device that has received a content protected under the standard should store and output the content in the mode defined by the standard.

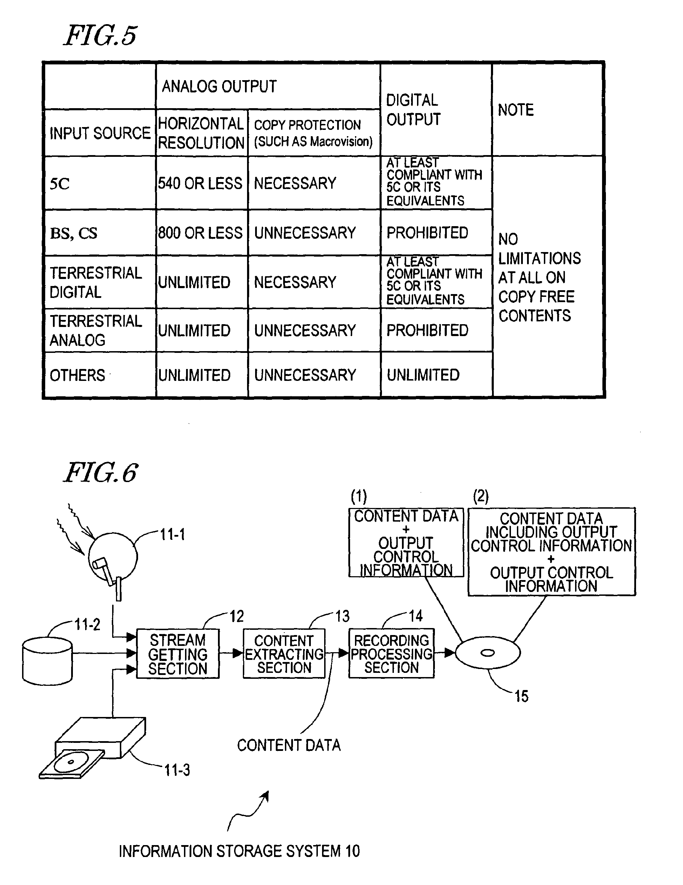

FIG. 5 shows exemplary output control rules on input sources. Hereinafter, it will be described as an example how the playback and output of stored data is controlled if the data has come from an input source compliant with the 5C-DTCP. In FIG. 5, the applied rules are defined on the row on which the input source is "5C". First, as for an analog output, its output is allowed if the number of horizontal scan lines is 540 or less and if a Macrovision signal is added to deter analog copying. As for a digital output, on the other hand, its output is allowed only if the content is protected by a content protection technique authorized by the 5C (or if a higher degree of protection is guaranteed). The analog and digital output modes are controlled for data that has been input and stored via BS or CS, terrestrial data, and data that has come from various other types of input sources.

The output control rule changes according to the protection method. Thus, to guarantee protection on a content, the output of the content needs to be controlled by the strictest method. In that case, however, even high-resolution video must be output as low-resolution video.

To provide the best possible image and sound qualities for the user, information that allows him or her to identify the source of each given content (i.e., source information) may be defined and output rules to follow in accordance with that information may be consulted. Specifically, the source information may be included in copyright information to be stored on a storage medium. Then, there is no need to apply the strictest rules to every content and the content can be played back and output following the rules of playback process and without debasing the image and sound qualities unnecessarily.

To adopt such a method, however, the player must retain the output control rules on various input sources. In recording a content on a removable medium, in particular, the content should be played back by a different device from its original recorder, and therefore, every player needs to retain all of those output control rules. Actually, however, it is difficult to have each and every player always retain the newest output control rules. Consequently, an appropriate output control cannot be guaranteed on all input sources.

For example, the BS/broadband CS digital broadcasting has three types of services including digital TV service, digital audio service, and data service. All of these services are provided on the air as MPEG-2 transport streams (which will be referred to herein as "TS"). If the receiver of those broadcast waves outputs a content, of which the copyright needs to be protected, through a digital interface such as an IEEE 1394 interface, then the content is encrypted and transmitted under the DTCP (Digital Transmission Content Protection).

When a digital broadcast content is directly output from the broadcast receiver to the IEEE 1394 interface, it is possible to find which service was the source of the content and carry out an output control according to the specific source.

Nevertheless, even if a digital broadcast is stored as a TS on a storage medium, the player, as well as the receiver, needs to perform an output control according to the specific source when the content is played back. In Japan, for example, the Association of Radio Industries and Businesses (ARIB), which was founded to use radio waves effectively in the fields of telecommunications and broadcasting, prohibits the operation of the audio service, which is one of the three services described above, from transmitting data in the form of TS, which is protected under the DTCP, for the purpose of using the radio waves as effectively as possible. That is why the player must retain the rule that prohibits the output of a TS.

Also, now that a single type of players are shipped to various countries more and more often as the MPEG standards have become increasingly popular worldwide, it is a heavy burden on a manufacturer to set output control rules on a country-by-country basis and according to the input sources that are adopted in the broadcasting of each country.

An object of the present invention is to provide a technique of protecting the copyright of a given content appropriately according to the input source of the content.

### DISCLOSURE OF INVENTION

An information processing system according to the present invention is able to record a content on a medium. The information processing system includes: a stream getting section for getting a data stream representing the content; and a recording processing section for generating output control information and writing the data stream and the output control information on the medium. The output control information defines an appropriate output method, which is compatible with the output format of the content, following a rule that defines what type of processing should be done according to the type of input source of the content and the output format of the content and in accordance with source related information on the input source of the content.

The stream getting section may get a data stream including the source related information.

The recording processing section may get the source related information that includes copyright control information of the content and/or source information that shows the type of the input source. The copyright control information may be used to control at least one of the processing of recording the content and the processing of outputting the recorded content.

The recording processing section may get the source related information including the copyright control information, which includes recording control information for controlling recording of the content and/or output control information showing whether the content may be output or not.

The recording processing section may get source information, which shows the type of the input source by an acquisition route of the data stream, as the source related information.

The stream getting section may receive the data stream as a broadcast, and the recording processing section may find the acquisition route of the data stream by the channel of the broadcast received.

The recording processing section may find the acquisition route of the data stream by information identifying a broadcasting system.

The stream getting section may get the data stream from a content storage medium, which is different from the medium and on which the content is stored, and the recording processing section may find the acquisition route of the data stream by the type of the content storage medium.

The recording processing section may generate a stream file, in which the data stream is stored, and an information file, in which the output control information is stored, for the medium.

The recording processing section may describe the output control information in the data stream and may generate a stream file, in which the data stream is stored, and an information file, in which the output control information is stored, for the medium.

The data stream received may include control information that defines how to output the content, and the recording processing section may further generate different pieces of output control information for respective portions of the content in accordance with the control information.

The recording processing section may describe those pieces of output control information for the respective portions of the content within the data stream and may generate a stream file, in which the data stream is stored, for the medium. When describing output control information that prohibits output, the recording processing section may generate an information file, in which the output control information that prohibits output is stored, for the medium.

The data stream received may include control information that defines how to output the content. If the control information includes a portion that prohibits outputting the content, the recording processing section may generate output control information that prohibits outputting the entire content.

The recording processing section may further generate checking data based on information unique to the medium and the output control information, and may write the checking data on the medium.

The content may be an audio content, and the recording processing section may retain a rule that defines what type of processing should be done according to the output mode of the audio content.

An information processing method according to the present invention is designed to record a content on a medium. The method includes the steps of: getting a data stream representing the content; generating output control information, the output control information defining an appropriate output method, which is compatible with the output format of the content, following a rule that defines what type of processing should be done according to the type of input source of the content and the output format of the content and in accordance with source related information on the input source of the content; and writing the data stream and the output control information on the medium.

A computer program according to the present invention is executed by an information processing system for recording a content on a medium. The computer program is defined so as to make the information processing system, executing the computer program, perform the steps of: getting a data stream representing the content; generating output control information, the output control information defining an appropriate output method, which is compatible with the output format of the content, following a rule that defines what type of processing should be done according to the type of input source of the content and the output format of the content and in accordance with source related information on the input source of the content; and writing the data stream and the output control information on the medium.

Another information processing system according to the present invention is designed to play back a content that is stored on a medium. Output control information, defining an appropriate output method compatible with the output format of the content, has been written on the medium. The output control information has been generated following a rule that defines what type of processing should be done according to the type of input source of the content and the output format of the content and in accordance with source related information on the input source of the content. The information processing system includes: a reading processing section for reading the output control information and a data stream representing the content from the medium; and an output control section for outputting the content in accordance with the output control information.

### BRIEF DESCRIPTION OF DRAWINGS

FIG. **1** shows an arrangement of functional blocks in a conventional recorder/player **1100.**
FIG. **2** shows an arrangement of functional blocks in another conventional recorder/player **1200.**
FIG. **3(A)** shows how to process a digital signal that is protected by copy control information. FIG. **3(B)** shows how to process a digital signal that is not protected by the copy control information. And FIG. **3(C)** shows how to store an analog signal.
FIGS. **4(A)** and **4(B)** show the procedures of content playback and output processes.
FIG. **5** shows exemplary output control rules on input sources.
FIG. **6** shows an arrangement of functional blocks in an information storage system **10** according to a preferred embodiment of the present invention.
FIG. **7** shows an arrangement of functional blocks in an information storage device **100** according to this preferred embodiment.
FIG. **8(a)** shows the arrangement of packets in the TS received by the MPEG-TS processing section **103** and FIG. **8(b)** shows the arrangement of packets in the partial TS that has been output from the MPEG-TS processing section **103.**
FIG. **9** shows an arrangement of functional blocks in the MPEG-TS processing section **103.**
FIG. **10** lists the service information (SI) and program specific information (PSI) that are used in a TS.
FIG. **11** shows an exemplary data structure of a program map table PMT.
FIG. **12** shows the data structure of a digital copy control descriptor.
FIG. **13(a)** shows correspondence between a two-bit value described in the copy_control_type field and the operation of the information storage device 100 associated with that value.
FIG. **13(b)** shows correspondence between a two-bit value described in the digital_recording_control_data field and the operation of the information storage device 100 associated with that value.
FIG. **13 (c)** shows correspondence between a two-bit value described in the APS_control_data field and the operation of the information storage device **100** associated with that value.
FIG. **14** shows exemplary operating rules on content protection.
FIG. **15** shows the data structure of a content availability descriptor.
FIG. **16** shows the contents of processing to be done according to the bit value in the encryption_mode field.
FIG. **17** shows the data structure of a service descriptor.
FIG. **18** shows correspondence between a possible value in the service_type field and its associated service.
FIG. **19** shows exemplary rules on a copyright protection requirement according to a given service type and a parameter value associated with the requirement when a content is recorded digitally.
FIG. **20** shows a hierarchy established by the file system of the medium **110.**
FIG. **21(a)** shows the data structure of a copy status descriptor. FIG. **21(b)** shows the data structure of a private_data_byte field included in the copy status descriptor. FIGS. **21 (c)** through **21(e)** show the definitions of EPN and output 1 and 2 fields that are defined in the private_data_byte field.
FIG. **22(a)** shows an exemplary data structure of the copyright control information generated by copyright information generating section **105** and FIG. **22(b)** shows the values of copy control information (CCI) and the definitions of its associated copy controls.
FIG. **23** shows how (a portion of) copyright control information may be described when multiple pieces of copy control information are defined for a single content.
FIG. **24** is a flowchart showing the procedure of the recording processing done by the information storage device **100.**
FIG. **25** shows an arrangement of functional blocks in an information playback system **20** according to this preferred embodiment.
FIG. **26** shows an arrangement of functional blocks in an information player **200** according to this preferred embodiment.
FIG. **27** is a flowchart showing the procedure of the playback processing done by the information player **200.**
FIG. **28** shows another example of the rules shown in FIG. **19.**
FIG. **29** shows an arrangement of functional blocks in an information storage device **120** according to this preferred embodiment.
FIG. **30** shows a configuration of a transmission system 300 according to this preferred embodiment.
FIG. **31** shows an exemplary procedure of processing to be done when a content cannot be received due to TTL constraints.
FIG. **32** shows an exemplary procedure of processing to be done when a content can be received.
FIG. **33** shows an exemplary procedure of processing to be done when an RTT is used.
FIG. **34** shows a transmission system including a TTL setting section **42** and a TTL adjusting section **47.**

### BEST MODE FOR CARRYING OUT THE INVENTION

Hereinafter, preferred embodiments of the present invention will be described with reference to the accompanying drawings.

### EMBODIMENT 1

FIG. **6** shows an arrangement of functional blocks in an information storage system **10** according to a preferred embodiment of the present invention. The information storage system **10** can write digital data, representing a content, on a medium **15.** More particularly, the information storage system **10** may be a DVR system, which is loaded with a RAM disk such as a DVD-RAM and reads and/or writes data from/on the RAM disk. Alternatively, the information storage system **10** may also be implemented as an HDR system, which has a built-in hard disk and reads and/or writes data from/on the hard disk. The medium **15** can store digital data thereon and may be an optical disk such as a DVD or a CD, a magnetic disk such as a magneto-optical disk or an HD, a magnetic tape, or a semiconductor memory (e.g., a RAM).

If some restrictions are imposed on writing content data on the medium **15** (i.e., outputting it to the medium **15**) for the purpose of copyright protection, for example, then the information storage system **10** performs processing to meet those restrictions. For example, if the information storage system **10** has received a data stream representing an audio content and if the data stream has been provided with additional copy control information showing "recordable only once", then the information storage system **10** writes the data stream on the medium **15** with the copy control information changed into "no copying permitted anymore". In this case, the copy control information may be written on a different file from a data stream file. Optionally, the data stream may be encrypted and then written on the medium **15.** In another example, the information storage system **10** may have received a data stream representing a TV video content and no restrictions may be imposed on its recording. In that case, the information storage system **10** adds copy control information showing "copying permitted without restrictions" to the data stream and then writes the data stream on the medium **15.**

As to whether a given content is recordable or not and whether it can be played back and output or not, it is also determined by considering what source has provided that content. More specifically, it is also taken into consideration whether the input source is an audio service that provides audio contents or a TV service that provides video contents.

In writing a data stream on the medium **15,** the information storage system **10** derives copy control information (i.e., information showing whether or not the content will be able to be copied or stored after that) and output control information (i.e., information showing whether or not the content will be able to be played back and output after that) according to the input source, the contents of the copy control information in the data stream of the content, and predetermined rules. Then, the information storage system **10** writes the copy control information and output control information within the data stream and/or in a different file from the data stream. In the following description, the copy control information and output control information will be referred to herein as "copyright control information" collectively.

In accordance with the copyright control information, the output device can determine whether or not the data stream can be output as digital data or whether or not the data stream can be further copied during the playback process. For example, the output device can determine, by only the output control information of the copyright control information, whether or not the data stream can be output as digital data. As a result, the information showing the input source is not needed anymore and the playback/output device does not have to retain the type of the input source and a rule for processing to be done in that situation. The player has only to have the function of interpreting the output control information. Also, the output device can determine, by the copy control information of the copyright control information, whether the data stream can be further copied or not.

Hereinafter, the information storage system **10** will be described in more detail. The information storage system **10** includes a signal receiving section (including an antenna **11-1** to receive a broadcast signal (as radio waves) and a hard disk **11-2** and an optical disk drive **11-3** that output a digital signal), a stream getting section **12,** a content extracting section **13,** a recording processing section **14** and a medium **15.**

The signal receiving section receives a signal concerning a data stream. The stream getting section **12** gets the data stream from the signal that has been received at the signal receiving section. The signal may be a signal from a broadcasting satellite (BS) or a terrestrial digital signal.

The content extracting section **13** extracts a content from the data stream and outputs it as content data. The data stream does not necessarily include just a single content but may include two or more contents. In the latter case, the content extracting section **13** extracts a content to be recorded.

The recording processing section **14** stores a table of rules defining what type of processing should be done according to the input source of a given content and the output mode of that content. The "input source" means the type of service given by the content's provider, e.g., digital TV service, digital audio service or data service.

The recording processing section **14** receives the content data, locates its input source, and consults its table with the input source and the copy control information of the content within the content data, thereby generating output control information on an output format basis. Then, the recording processing section **14** writes the content data and the output control information generated on the medium **15** (such as an optical disk). Writing may be performed (1) such that the content data and the output control information are stored separately on the medium **15** or (2) such that the output control information is included in the content data and that the content data and the output control information are stored separately on the medium **15.** If necessary, the recording processing section **14** may encrypt the content data and then store the encrypted content data on the medium **15.**

Optionally, the recording processing section **14** may write not only the output control information but also the copy control information on the medium **15** in the write mode (1) or (2) described above. If the contents of the copy control information need to be changed, then the recording processing section **14** writes updated copy control information.

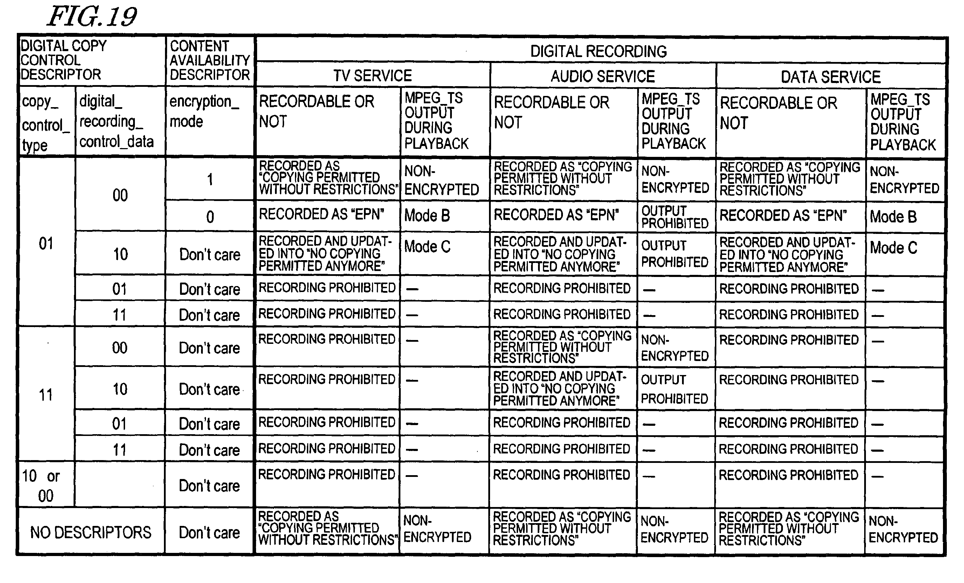

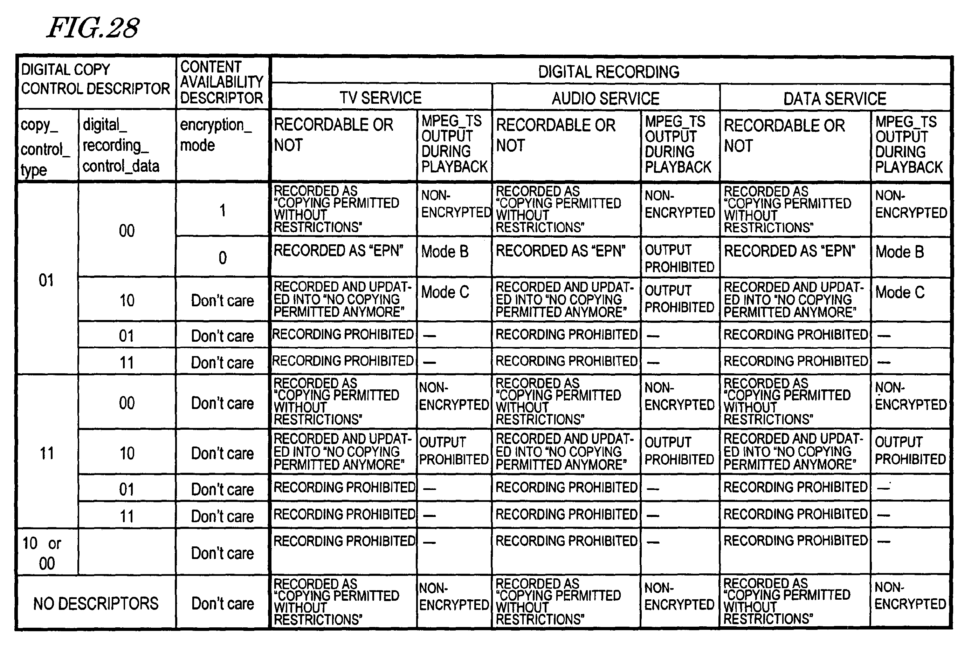

The output control information shows whether or not a given content may be output to another device. As for an audio service provided by the BS/broadband CS digital broadcasting, for example, the Japanese ARIB standard prohibits the output of an MPEG-2 transport stream (which will be referred to herein as a "TS"). Accordingly, as to outputting a content that has been broadcast via such an audio service, a one-bit value showing "TS output is prohibited" is generated as output control information for a digital output mode. On the other hand, if the content may be output as an analog signal of a standard resolution, then a one-bit value showing "analog output of a standard resolution is permitted" is generated as output control information for an analog output mode. These pieces of output control information are written on the medium 15 in the mode (1) or (2) described above. Other examples of the output control information will be described later, along with a specific example of the information storage system **10,** with reference to FIGS. **19, 28** and so on.

In the foregoing description, the recording processing section **14** is supposed to receive content data, for example, and write the data on the medium **15.** However, any component with the function of writing data on the medium **15** will be regarded as a member of the recording processing section **14.**

Also, in the foregoing description, the recording processing section **14** is supposed to generate output control information according to the input source and the copy control information of the content within the content data. However, the recording processing section **14** does not have to store these rules of correspondence as a table. Alternatively, similar output control information can be naturally generated by providing a processing program that judges conditions following those rules of correspondence.

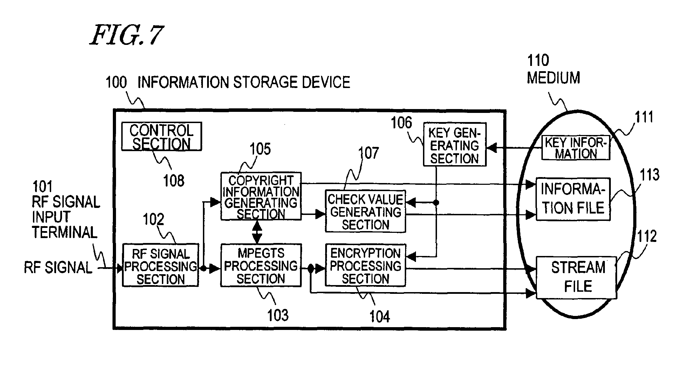

Next, the configuration and operation of an information storage device, which is an exemplary implementation of the information storage system **10,** will be described with reference to FIG. **7.**

FIG. **7** shows an arrangement of functional blocks in an information storage device **100** according to this preferred embodiment. The information storage device **100** includes an RF signal input terminal **101,** an RF signal processing section **102,** an MPEG-TS processing section **103,** an encryption processing section **104,** a copyright information generating section **105,** a key generating section **106,** a check value generating section **107,** and a control section **108.** A medium **110** is illustrated in FIG. **7.** However, in the following description, the medium **110** is removable from the information storage device **100** and is not a member of the information storage device **100.** The information storage system **10** described above is made up of the information storage device **100** and the medium **110.** The medium **110** may be a rewritable Blu-ray disc or an HD-DVD.

The information storage device **100** stores content's data (which will be referred to herein as "content data") on the medium **110.** According to the file system of the medium **110,** the content data is handled as a stream file **112.**

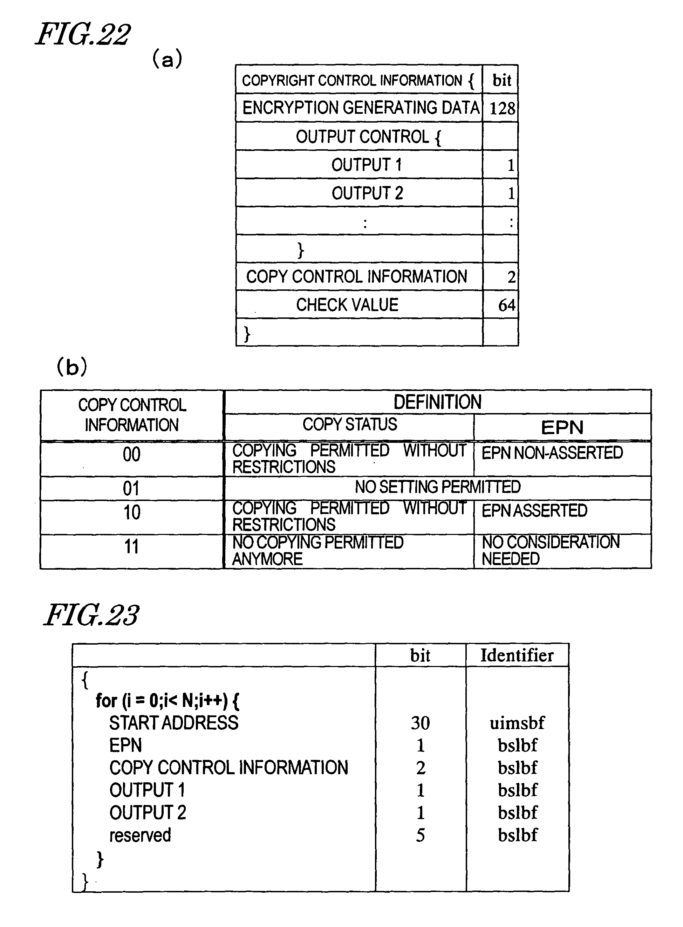

To the RF signal input terminal **101,** input is an RF signal representing a digital broadcast, for example. The RF signal processing section **102** may be a digital tuner, for example, and generates a TS from the RF signal. The MPEG-TS processing section **103** generates an MPEG partial TS (which will be referred to herein as a "partial TS") from the TS that has been got from the RF signal processing section **102.** The encryption processing section **104** encrypts the partial TS. The copyright information generating section **105** generates copyright control information (including copy control information and/or output control information) from the TS. The copyright control information will be described later with reference to FIG. **22(a),** for example. The key generating section **106** generates a cryptographic key based on the key information **111** that is stored in advance on the medium **110.** The check value generating section **107** generates a check value based on the copyright control information and the key. The control section **108** controls the overall operation of the information storage device **100.** If the information storage device **100** is implemented as an optical disk recorder, then the control section **108** may be a central processing unit (CPU).

On the medium **110,** stored are the key information **111,** a stream file **112** and an information file **113.** The information file **113** includes the copyright control information and the check value at least. It will be described later how the information storage device **100** operates using these pieces of information.

Hereinafter, it will be described how the information storage device **100** of the present invention operates. In the following description, the operation of the information storage device **100** will be outlined first, and then respective components thereof will be described one by one.

An RF signal representing a digital broadcast, which has been input through the RF signal input terminal **101,** is transformed by the RF signal processing section **102** into a TS. In the TS, TS packets, storing video and audio data of a plurality of programs, are multiplexed together. The MPEG-TS processing section **103** extracts only TS packets concerning a designated program from the TS packets that form the TS, thereby generating a partial TS. More specifically, the MPEG-TS processing section **103** chooses TS packets concerning the designated program, extracts necessary information from a packet in which a program association table (PAT) is stored, and reconstructs a program map table (PMT) for the partial TS.

The key generating section 106 generates a cryptographic key by using a device ID key (not shown) stored on the information storage device **100** and the key information **111** stored on the medium **110.**

The encryption processing section **104** encrypts the partial TS by using the key that has been generated by the key generating section **106.** The encrypted partial TS is stored as the stream file **112** on the medium **110.**

The copyright information generating section 105 extracts necessary information from the TS and generates copyright control information based on that information. The check value generating section **107** generates a check value by using the key that has been generated by the key generating section **106** and the copyright control information. The copyright information generating section **105** and check value generating section **107** respectively write the copyright control information and the check value on the information file 113 on the medium **110.**

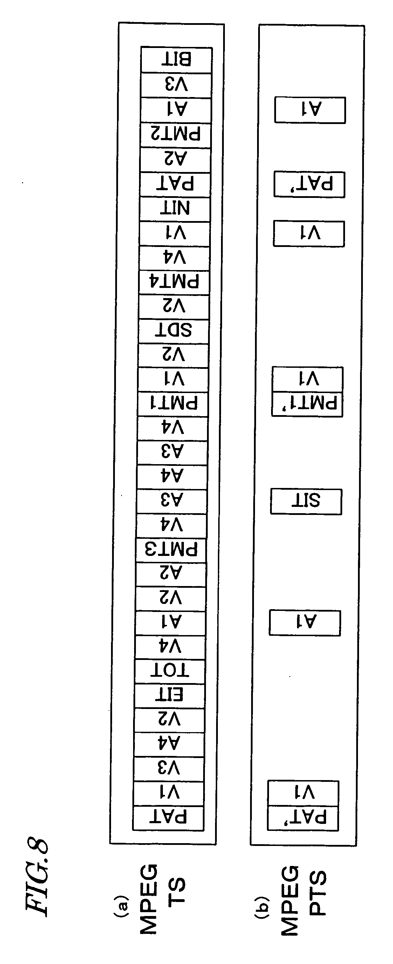

Hereinafter, the respective components of the information storage device **100** will be described in further detail. First, the MPEG-TS processing section **103** generates a partial TS from the TS. FIG. **8(a)** shows the arrangement of packets in the TS received by the MPEG-TS processing section **103** and FIG. **8(b)** shows the arrangement of packets in the partial TS that has been output from the MPEG-TS processing section **103.** Each box with a label PAT, V1, etc. corresponds to a single TS packet. Vn, An (where n=1 to 4) and so on represent that the video and audio data of a program n are included.

The MPEG-TS processing section **103** extracts not only the video and audio packets **V1** and **A1** of Program No. 1 but also PAT and PMT1 tables of program association information from the TS shown in FIG. **8(a)** and modifies the contents of those tables for the partial TS. As a result, PAT' and PMT1' are included in the partial TS. Also stored in the partial TS is a selection information table (SIT), including only the information concerning a selected program, in place of the service information (SI) and program specific information (PSI) that are included in the TS.

TS packets representing a particular program can be extracted from the TS by performing the following processing. For example, TS packets representing Program No. 1 may be extracted in the following manner. Suppose the program number (or channel number) of Program No. 1 is X. In that case, first, the TS packets are searched for the program association table (PAT) packet. More specifically, a packet ID (PID) is assigned to each TS packet. The PID of the program association table packet may be zero, for example. Then, the TS may be searched for a packet having that value.

In the program association table in the program association table packet, respective program numbers and the program map table (PMT) packet IDs of respective programs associated with those program numbers are stored. Thus, the packet ID (PID) of the program map table (PMT) associated with the program number X can be detected. The PID of the program map table PMT is supposed to be XX.

Next, when a packet with PID=XX is extracted, a program map table associated with the program number X can be obtained. The program map table PMT includes the PIDs of TS packets, in which the video, audio and other information of each program to watch and listen to is stored. For example, the PID of the video information associated with the program number X may be XV and the PID of the audio information thereof may be XA. By using the PID (= XV) of the packet storing the video information and the PID (= XA) of the packet storing the audio information, the video and audio packets about a particular program content can be extracted from a single TS.

In making a partial TS from a TS, the program association table PAT and program map table PMT need to be corrected. This is because the original TS and the partial TS include different numbers of programs, and therefore, the program association table PAT and the program map table PMT need to be adapted to the partial TS. Also, the original TS includes SI packets. An SI packet includes data describing the contents, schedule/timings and so on of the programs included in the original TS and separately defined expansion information (which is also called "program service information"). In the original TS, the SI packet includes as many as 20 to 30 different types of data. Among these types of data, only important data for playing the partial TS is extracted to generate a single SIT packet and multiplex it in the partial TS.

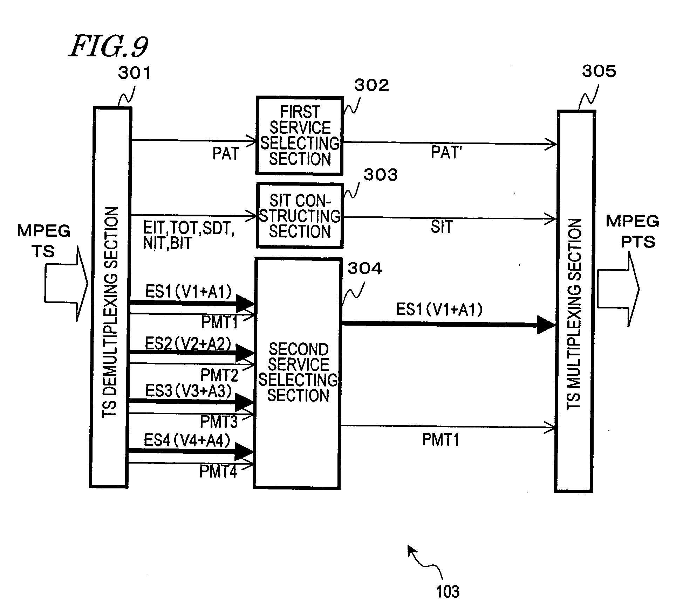

FIG. **9** shows an arrangement of functional blocks in the MPEG-TS processing section **103.** The MPEG-TS processing section **103** generates a partial TS from the TS by using the components shown in FIG. **9.** It should be noted that the TS and the partial TS are just as shown in FIGS. **8(a)** and **8(b),** respectively.

The MPEG-TS processing section **103** includes a TS demultiplexing section **301,** a first service selecting section **302,** an SIT constructing section **303,** a second service selecting section **304,** and a TS multiplexing section **305.**

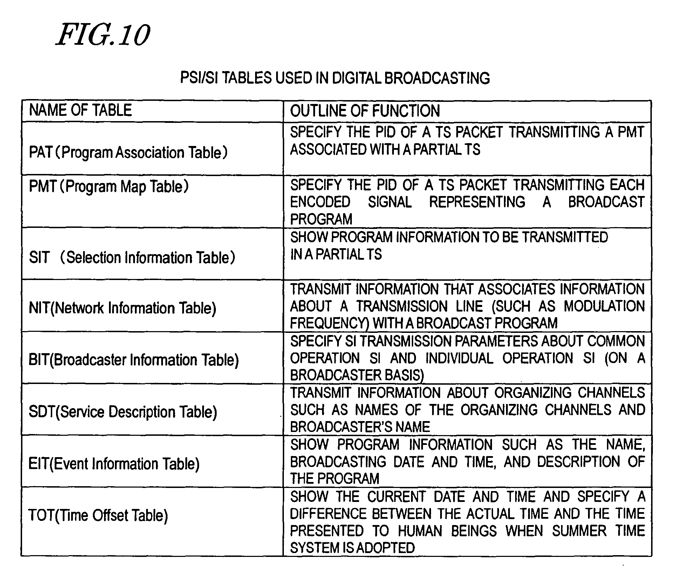

On receiving a TS in which four contents have been multiplexed together, the TS demultiplexing section **301** demultiplexes the TS into its elements including service information (SI), program specific information (PSI), and elementary stream (ES). The service information (SI) and program specific information (PSI) are generic terms of the structure (called a "table") shown in FIG. **10,** which lists the service information (SI) and program specific information (PSI) that are used in a TS. In each of these tables, respective pieces of information are arranged in a predefined order. Elementary streams ES are defined for the video data and audio data of each program. For example, the elementary stream ES concerning the video of program n is separately stored in TS packets Vn. In FIG. **9,** the video and audio elementary streams of the program n are collectively identified by ESn for convenience sake.

The first service selecting section **302** extracts a portion, specifying the PID of a TS packet that transmits the program map table PMT associated with the partial TS of a designated program, from the program association table PAT, in which multiple sets of program information are stored, thereby generating PAT'.

The SIT constructing section **303** extracts only a portion defining the service information and program specific information about a designated program from the tables representing the service information (SI) and program specific information (PSI) of multiple programs included in the TS, thereby newly compiling a selection information table SIT.

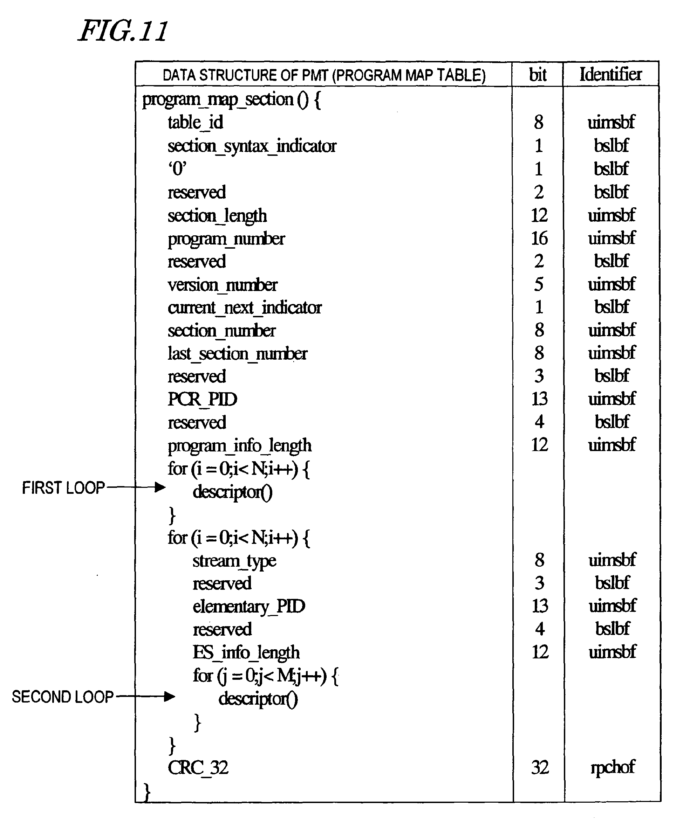

The second service selecting section **304** selectively gets only the ES of the designated program from the ES of respective programs that have been separated by the TS demultiplexing section **301.** The second service selecting section **304** also gets a program map table PMT associated with the ES acquired and then outputs not only the ES acquired but also the program map table PMT, from which the portion specifying the PID of the packet where the ES divided data is stored has been extracted. In FIG. **9,** for example, the second service selecting section **304** outputs ES1 (including V1 and A1) about Program No. 1 and PMT1 associated with that ES1. Optionally, the second service selecting section **304** may also store the copyright control information (to be described later) on the program map table PMT and then output the program map table PMT. The program map table PMT of the present invention will be described in detail later with reference to FIG. 11.

The TS multiplexing section 305 multiplexes together the program association table PAT', selection information table SIT, elementary stream ES and program map table PMT of the designated program, thereby making a partial TS.

In this manner, a partial TS, including only the information of a particular program, is reconstructed from a TS including the information of multiple programs. This partial TS is encrypted by the encryption processing section **104** (to be described later) and then stored in the stream file **112** of the medium **110.**

Next, the key generating section **106** will be described with reference to FIG. **7** again. First, the key generating section **106** reads the key information **111** from the medium **110.** The key information **111** includes a medium key block MKB and a medium ID. The medium key block MKB was recorded on the medium being manufactured and can be read but cannot be rewritten. The medium ID was also recorded on the medium being manufactured so as not to be rewritable. The medium ID is a unique value given to each individual medium.

The key generating section **106** calculates the value of the medium key based on the medium key block MKB and the device ID key. The device ID key is a unique value that was given to each recorder during its manufacturing process and is stored so as not to be exposed by a normal method. If the same MKB is used, then the same medium key is obtained from the device ID key of any device. The medium key thus obtained is an electronic key used for copyright protection purposes.

It should be noted that to cope with a situation where a device ID key has been read illegally, information invalidating that device ID key may be stored in the MKB such that the medium key cannot be generated from the device ID key.

Next, the key generating section **106** calculates a medium ID key based on the medium key that has been calculated in advance and the medium ID stored in the key information **111.** The medium ID key is written on the medium **110.** The medium ID key is used to encrypt a title key (not shown) and to calculate a check value as will be described later. To guarantee the security of cryptography and check values, various semiconductors and interconnects are arranged so as to deter illegal reading of the medium key and the medium ID key.

Next, the copyright information generating section **105** will be described in detail.

The copyright information generating section **105** also receives the TS from the RF signal processing section **102.** As described above, the service information (SI) and program specific information (PSI) shown in FIG. **10** are included in the TS. The standard permits the service information (SI) and program specific information (PSI) to store an arbitrary number of structures called "descriptors" at particular locations. FIG. **11** shows an exemplary data structure of a program map table PMT. In the program map table PMT, arbitrary descriptors may be inserted into locations that are called "first loop" and "second loop", respectively.

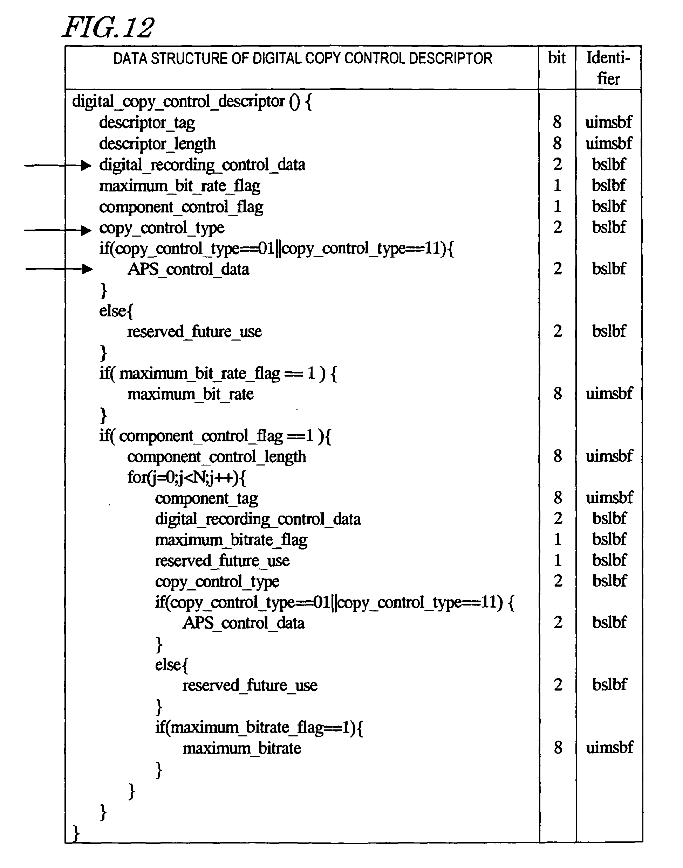

Examples of descriptors insertable into these locations include a digital copy control descriptor and a content availability descriptor, each of which is a descriptor contributing to copyright protection in digital broadcasting. Hereinafter, the data structures of these two descriptors will be described with reference to FIGS. **12** through **16.**

FIG. **12** shows the data structure of a digital copy control descriptor. The digital copy control descriptor is provided to define control information about digital copying or analog copying or to describe a maximum transfer rate for the overall service.

In the two fields digital_recording_control_data and copy_control_type of the digital copy control descriptor, copyright protection information is described as pointed by the upper two arrows in FIG. **12.**

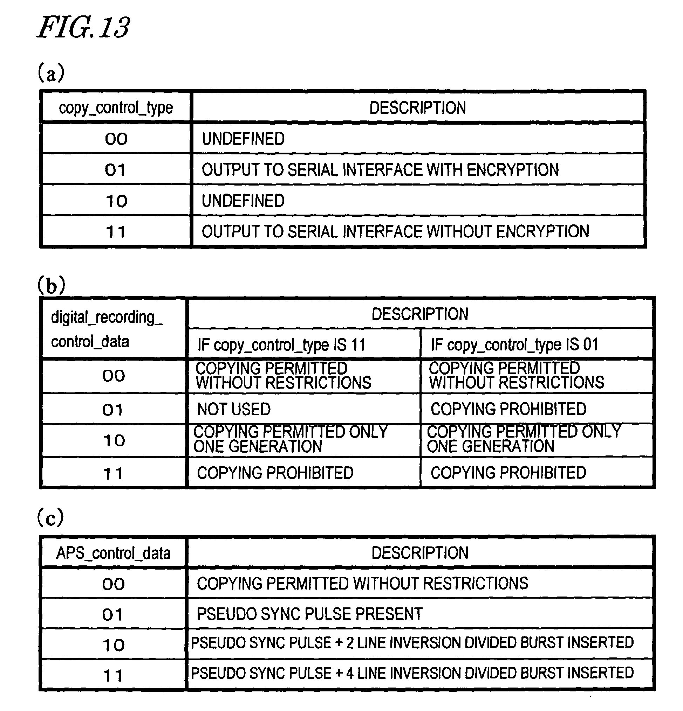

The copy_control_type field has a two-bit value representing information about the form of copy generation control. FIG. **13(a)** shows correspondence between a two-bit value described in the copy_control_type field and the operation of the information storage device **100** associated with that value. For example, if the value in the copy_control_type field is "01", then the information storage device **100** encrypts given content data and then outputs the encrypted data to the serial interface (through the IEEE 1394 bus). On the other hand, if the value in the copy_control_type field is "11", then the information storage device **100** outputs the content data to the serial interface without encrypting it.

The digital_recording_control_data field includes information about the copy generation control. The operations associated with the values in this field are defined so as to apply to the situation where the value in the copy_control_type field is "11" or "01" (i.e., where the content data is output through the IEEE 1394 bus). Specific operations are just as shown in FIG. **13(b),** which shows correspondence between a two-bit value described in the digital_recording_control_data field and the operation of the information storage device 100 associated with that value.

Furthermore, in the APS_control_data field pointed by the third uppermost arrow in FIG. **12,** information for controlling an analog protection system that can be added to an analog video signal is described. As used herein, the "analog protection system" may mean a "Macrovision signal" and is known as an analog copy control signal (which is called an "AGC (automatic gain control)" or "Corol Stripes") licensed by Macrovision Corporation. More specifically, unless the value in the digital_recording_control_data field is "11" and unless the value in the APS_control_data field is "00", the Macrovision signal is added. There are some storage media that can inherit the APS_control_data field. For example, a content, of which the digital_recording_control_data field has a value "10", may be recorded as "no copying permitted anymore". And when the "no copying permitted anymore" content is played back, the Macrovision signal may be added to the analog video output according to the value in the APS_control_data field inherited by the storage medium.

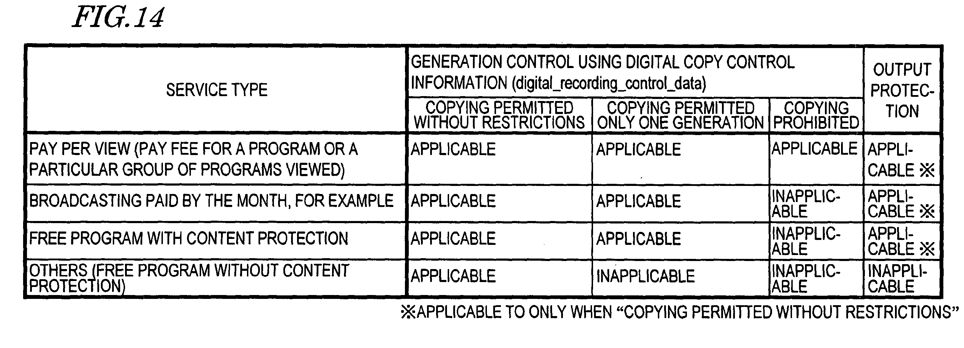

If the value in the copy_control_type field is "01", then the content is encrypted and output to the serial interface according to predetermined operation rules. FIG. **14** shows exemplary operating rules on content protection. In the "output protection" column, "operation permitted" or "operation prohibited" indicates whether the output of a "copying permitted without restrictions" content to the high-speed digital interface (i.e., the IEEE 1394 bus) should be protected or not by using the output protection bit (encryption_mode) of the content availability descriptor.

In FIG. **14,** as to a free, non-content-protected program (i.e., a program, of which the content is not protected using cryptography, for example, in broadcasting waves), only "00" (corresponding to "copying permitted without restrictions") can be set as a value in the digital_recording_control_data field. It should be noted that if the value in the copy_control_type field is "11", then the operation rules on content protection shown in FIG. **14** are not applied. Thus, setting in the digital_recording_control_data field is solely up to the broadcaster.

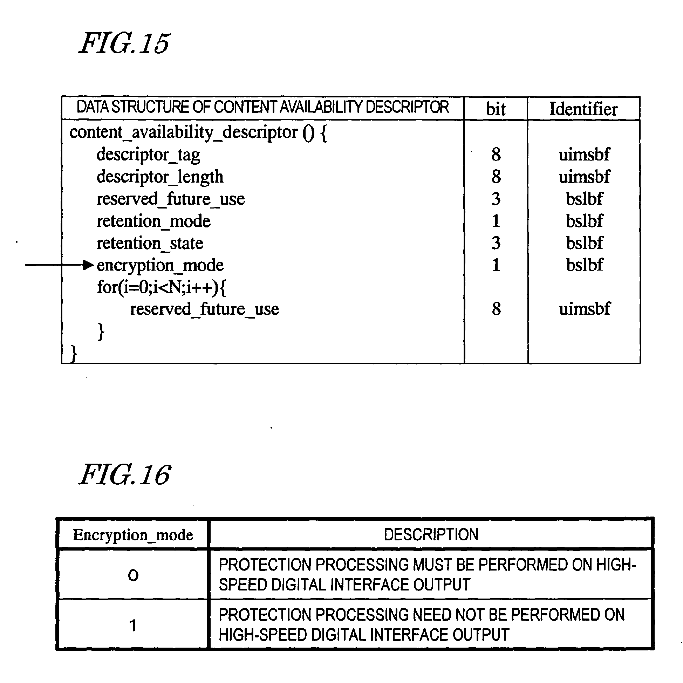

Next, the content availability descriptor will be described with reference to FIG. **15,** which shows the data structure of the content availability descriptor.

The content availability descriptor is defined to describe control information about the storage of data on a medium and the output thereof with respect to a program. Among various fields described as the content availability descriptor, copyright protection information is described as a one-bit value in the encryption_mode field pointed by the arrow. More specifically, the encryption_mode field is used to protect the output through a high-speed digital interface (such as an IEEE 1394 bus). FIG. **16** shows the contents of processing to be done according to the bit value in the encryption-mode field.

It should be noted that the digital copy control descriptor and content availability descriptor may be described not just in the program map table PMT but also in a service description table (SDT) or in an event information table (EIT).

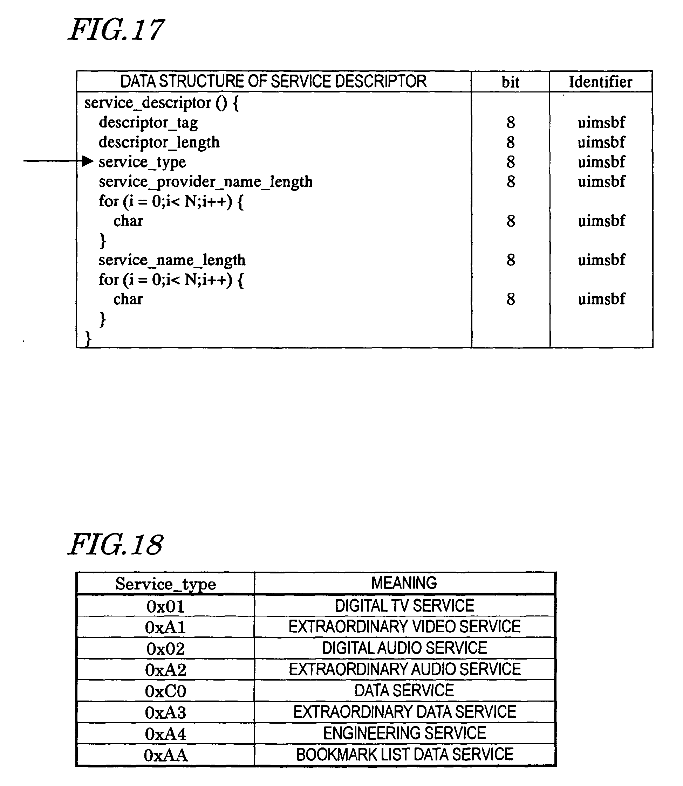

FIG. **17** shows the data structure of a service descriptor. The service descriptor is a parameter defined in the service description table (SDT) mentioned above and describes a parameter showing the source of the input signal. This parameter is called a "service type". In the digital broadcasting, for example, a digital TV service providing digital video contents, a digital audio service providing digital audio contents, a data service providing data contents such as character information and other service types are defined. The service type is described in the service_type field of the service descriptor. In FIG. **17,** the service_type field is pointed to by the arrow. FIG. **18** shows correspondence between a possible value in the service_type field and its associated service. The copyright protection is defined slightly differently according to the service type, but the specific difference will be described later.

In digitally recording a digital broadcast content on a removable medium, the copyright protection mode of the removable medium needs to be set in accordance with the copy control information added to the content. FIG. **19** shows exemplary rules on a copyright protection requirement according to a given service type and a parameter value associated with the requirement when a content is recorded digitally.

For example, TV service related contents may have their copyright protected in the following manner. Specifically, if the value in the copy_control_type field of the digital copy control descriptor is "11", then the content is processed as non-recordable. On the other hand, if the value in the copy_control_type field of the digital copy control descriptor is "01", the value in the digital_recording_control_data field is "00" and the value in the encryption_mode field is "1", then the content is regarded as "copying permitted without restrictions" and recorded on the removable medium without restrictions. In that case, the encryption processing section **104** does not carry out any encryption process on the data stream representing the content. Meanwhile, if the value in the encryption_mode field is "0", then it is interpreted as "encryption plus non-assertion (EPN)" and the content is recorded. The "EPN" means that the content may be copied without restrictions but must be recorded with encryption.

On the other hand, if the value in the digital_recording_control_data field of the digital copy control descriptor is "10" (see FIG. **13(b)),** then it is interpreted as "copying permitted only one generation" and the content may be recorded on the medium. However, once the content has been recorded, no recording is permitted any longer. Thus, the copyright information generating section **105** changes the copy control information into "no copying permitted anymore" and the encryption processing section **104** records an encrypted content.

If the value in the digital_recording_control_data field of the digital copy control descriptor is "11", then it is interpreted as "copying prohibited" (see FIG. **13(b)).** Thus, no recording of the data stream representing the content is permitted in that case. In the column "MPEG-TS output during playback" in FIG. **19,** "Mode B" and "Mode C" represent copy control requirements according to the transmission mode of the DTCP (data transmission content protection). Specifically, "Mode B" represents "copying permitted only one generation", while "Mode C" represents "no copying permitted anymore". When a device including a digital broadcast receiver outputs a content through an IEEE 1394 interface, the content is encrypted and then transmitted.

Similar processing is also carried out on digital recording and output of an audio service or a data service. Suppose a content that has been provided by an audio service is output as an MPEG-TS. In the output control information of that content, if the value in the copy_control_type field is "01" and if the value in the digital_recording_control_data field is "10", then output in the form of an MPEG-TS is prohibited.

As shown in FIG. **19,** if the service type is a TV service, a content, which may be recorded digitally on a removable medium, may also be output as a TS during the playback. In the audio service on the other hand, only a "copying permitted without restrictions" content can be output as a TS. However, an "EPN" or "no copying permitted anymore" content may not be output as a TS.

The copyright information generating section **105** generates output control information on an output format basis in accordance with the information included in the input signal during recording and following the rules of copyright protection according to the input source as retained in the information storage device **100.** The copyright protection rules may be retained either by storing the contents shown in FIG. **19** as a table or by executing a processing program for deciding conditions according to the rules. Also, if the contents of the copy control information need to be changed, the copyright information generating section **105** updates the copy control information. Hereinafter, it will be described how the output control information generated by the copyright information generating section **105** is written on the medium **110.**

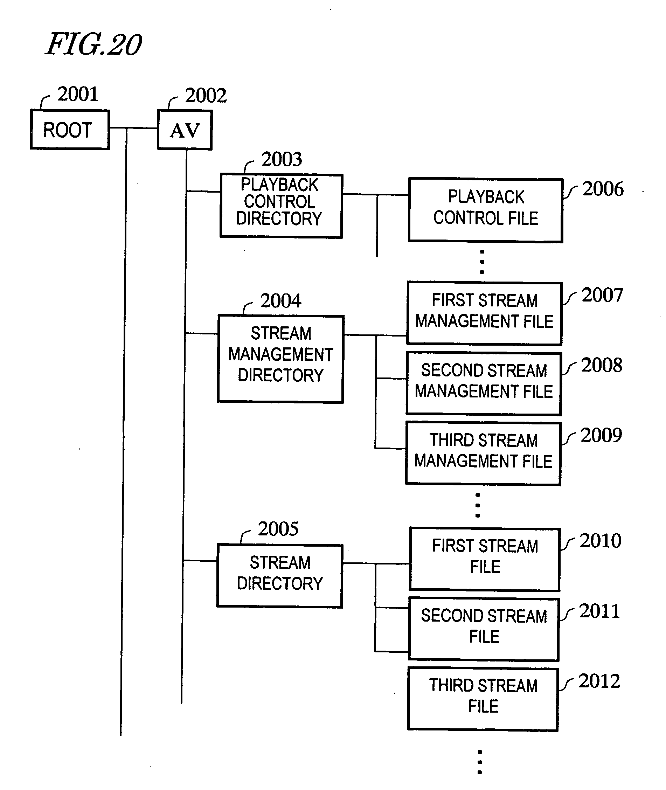

FIG. **20** shows a hierarchy established by the file system of the medium **110.** In this file system, a directory called "AV" **2002** is provided right under a root **2001.** The information storage device **100** stores a data stream and other audiovisual related data on the directory AV **2002** and other lower-order layers. A set of mutually related data is handled as a "file".

Under the directory AV **2002,** arranged are the three directories of a playback control directory **2003,** a stream management directory **2004** and a stream directory **2005.**

In the stream directory **2005,** files corresponding to the partial TS and including a first stream file **2010,** a second stream file **2011** and a third stream file **2012** are stored. This partial TS has been encrypted and output by the encryption processing section **104.** In the stream management directory **2004,** stored are a first information file **2007,** a second information file **2008,** a third information file **2009** and so on for managing the respective stream files that are stored in the stream directory **2005.** In the playback control directory **2003,** information on the order of playing back the respective stream files that are stored in the stream directory **2005** is stored. An information file is generated for each and every stream file. As to the medium shown in FIG. 7, just one stream file **112** and only one information file **113** are shown for the sake of simplicity.

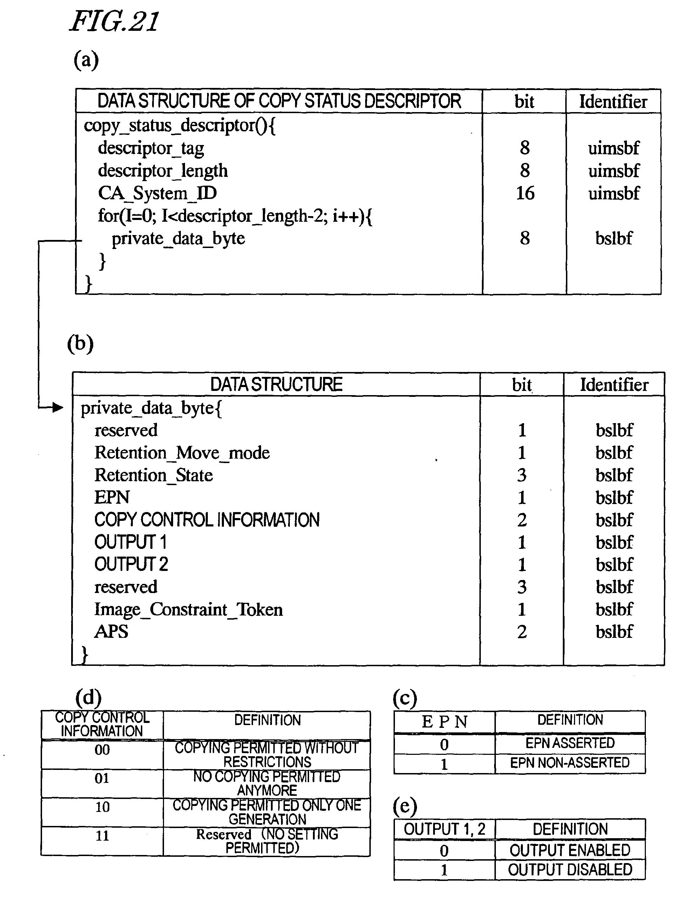

An output control flag and copy control information, representing the output control information on an output format basis, are stored as a copy status descriptor in the partial TS. FIG. **21(a)** shows the data structure of a copy status descriptor. FIG. **21(b)** shows the data structure of a private_data_byte field included in the copy status descriptor. FIGS. **21(c), 21(d)** and **21(e)** show the definitions of EPN, copy control information and output 1 and 2 fields that are defined in the private_data_byte field.

The outputs 1 and 2 shown in FIG. **21(e)** are output control flags showing whether or not the stored content in question may be output in their output modes during the playback. For example, output 1 may represent a TS and output 2 may represent an analog output with standard definition (SD) including accompanying analog audio. In recording a TV service, outputs 1 and 2 are both set "enabled". Meanwhile, in recording an audio service as "EPN" or "no copying permitted anymore", output 1 (TS) is disabled (i.e., output prohibited) and output 2 is enabled. It should be noted that the copy control information of the copy status descriptor also defines "copying permitted only one generation" so as to be applicable to an original content, too.

The copy status descriptor stores the copy control information and the output control flags described above in private_data_byte. The copyright information generating section **105** always analyzes the TS, generates a new copy status descriptor when there is a factor that changes the copy control information or output control flags, and sends it to the MPEG-TS processing section **103.** In making a program map table PMT, the MPEG-TS processing section **103** inserts the copy status descriptor. The copy status descriptor is inserted into the first loop (see FIG. 11) of the PMT. If some special copyright control information is assigned to the elementary stream representing a content, another copy status descriptor is inserted into the second loop associated with that elementary stream.

The contents of the information described by the copy status descriptor are not always fixed through a single content but may change sometimes. For example, if a copyright owner makes only a particular portion of a content "copying permitted only one generation" and makes the remaining portions "copying permitted without restrictions", then the contents of the copyright control information may change within the same content. Also, if a plurality of contents with mutually different degrees of copyright protection have been recorded continuously and handled as a single content as a result, the copyright control information may also change within the same content. Hereinafter, the latter example will be described.

Suppose in a situation where a digital broadcasting audio service has broadcast two programs (e.g., news and music programs) in a row, what type of processing the information storage device **100** should do to record them as a single content. Also, suppose copy control information showing "copying permitted without restrictions" is set for the news program and copy control information showing "copying permitted only one generation" is set for the music program. Then, while the news program is being recorded, the output control flag that permits the output of a TS is set by the output 1. And when the music program starts being recorded after the news program is over, the output control flag that prohibits the output of the TS is set. Also, if the input sources are changed from "audio service" into "TV service" while a digital broadcasting content is being recorded by the information storage device **100,** the output control flag of output 1 (i.e., IEEE 1394 bus) changes from "output disabled" into "output enabled". It should be noted that the copy status descriptor embedded as a descriptor in a partial TS is encrypted and stored as a portion of the stream file **112** on the medium **110.** Thus, the copy status descriptor is never modified on the medium.

Also, the output control flag, which is output control information for every output mode, and the copy control information (or copyright control information) are stored not only in a data stream but also in an information file **113.** FIG. **22(a)** shows an exemplary data structure of the copyright control information generated by copyright information generating section **105.** The copyright control information shown in FIG. **22(a)** is described in the information file **113** on the medium **110.**

The outputs 1, 2 and so on shown in FIG. **22(a)** are output control flags showing whether or not the stored content in question may be output in their output modes during the playback. For example, output 1 may represent a TS and output 2 may represent an analog output with standard definition (SD) including accompanying analog audio. In recording a TV service, outputs 1 and 2 are both set "enabled". Meanwhile, in recording an audio service as "EPN" or "no copying permitted anymore", output 1 (TS) is disabled and output 2 is enabled.

One information file **113** is provided for each content (i.e., each stream file). That is why each information file **113** stores copyright control information for its associated content as a whole. If the contents of the copyright control information change within a single content (e.g., if some portions are output enabled but the other portions are output disabled), then the entire content is made "output disabled", which is the strictest type of control.

FIG. **22(b)** shows the values of copy control information (CCI) and the definitions of its associated copy controls. The two-bit values shown on the left column of FIG. **22(b)** are described as the "copy control information" shown in FIG. **22(a).** The copy control information shown in FIG. **22(b)** shows "copying permitted without restrictions", "EPN" or "no copying permitted anymore". "EPN" is asserted in a situation where copy control information = "10" (i.e., "copying permitted without restrictions" and "EPN asserted"). Since this copy control information is defined for a storage medium, there is no "copying permitted only one generation". This is because the copy control information of a content that has been provided as "copying permitted without restrictions" and "EPN asserted" from an input source is stored as it is and because a content provided as "copying permitted only one generation" is updated into "no copying permitted anymore" once recorded on a medium.

The check value shown in FIG. **22(a)** is generated by the check value generating section **107.** The check value is used during playback to see if the output control flag, copy control information or any other information has not been altered illegally. The check value generating section **107** generates the check value based on the output control flag, copy control information and key information.

As can be seen from FIGS. **22(a)** and **21(b),** the copy control information, outputs 1 and 2 and other common information are described in the respective fields of the copyright control information and those of the copy status descriptor.

Optionally, multiple pieces of copyright control information may be generated for a single content such that the content is subjected to multiple copy controls. FIG. **23** shows how (a portion of) copyright control information may be described when multiple pieces of copy control information are defined for a single content. As shown in FIG. **23,** the start address of a portion of the content, to which the copy control information starts to be applied, and the copy control information may be defined in combination and the copy control information may be described for each combination. As a result, the copy control information may be defined for each portion of the content and more specific copyright protection is realized even without checking the copy status descriptor embedded in the content.

Next, the check value generating section **107** will be described in more detail. To generate the check value, a unidirectional function G (d1, d2) is used. When using the unidirectional function, it is difficult to perform reverse calculations due to its nature. In other words, if the unidirectional function G and the d1 and d2 values are used, k = G (d1, d2) can be calculated easily. However, it is difficult to obtain d2 from k and d1.

Supposing d1 is a data value to be checked with the copyright control information and d2 is the value of a medium ID key, the check value generating section **107** can calculate the check value **k** from d1 and d2. Then, the check value generating section **107** writes this data value **d1** to be checked and the check value **k** on the information file **113** on the medium **110.** The medium ID key **d2** is strictly managed by the information storage device **100** so as not to leak to the outsiders.

Hereinafter, the processing done by the information storage device **100** to record a content on the medium **110** will be described. In the following example, the information storage device **100** is supposed to receive a digital broadcast signal.

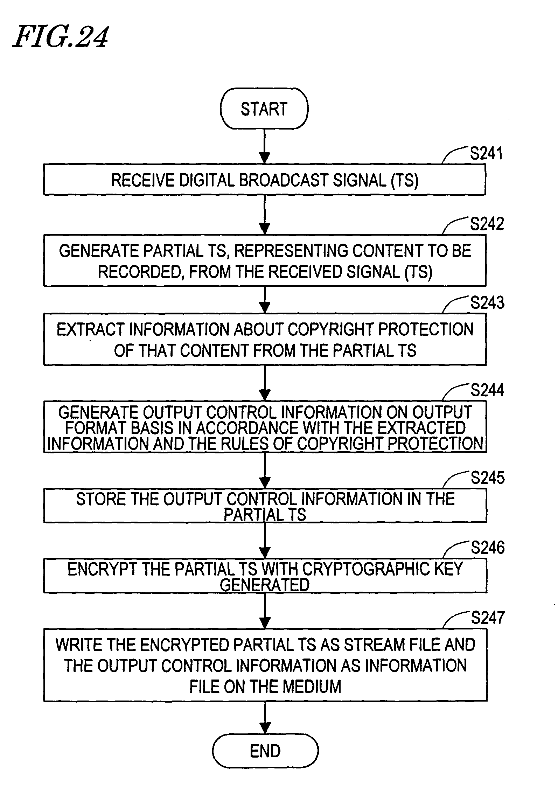

FIG. **24** shows the procedure of the recording processing done by the information storage device **100.** First, in Step **S241,** the RF signal processing section **102** receives a digital broadcast signal (TS) through the RF signal input terminal **101.** Next, in Step **S242,** the MPEG-TS processing section 103 generates a partial TS, representing the content to be recorded, from the received signal (TS). Also, in Step **S243,** the MPEG-TS processing section **103** extracts information about the copyright protection of that content from the partial TS and sends it to the copyright information generating section **105.**

Then, in Step **S244,** the copyright information generating section **105** generates output control information on an output format basis in accordance with the extracted information and the rules of the copyright protection and sends it to the MPEG-TS processing section **103.** In response, the MPEG-TS processing section **103** stores the output control information in the partial TS in Step **S245.** Next, in Step **S246,** when the key generating section **106** generates a cryptographic key by using the device ID key and the key information **111,** the encryption processing section **104** encrypts the partial TS with that cryptographic key. In the meantime, the check value generating section **107** generates a check value based on the data value **d1** to be checked, including the copyright control information, and the medium ID key value **d2**.

Subsequently, in Step **S247**, the encryption processing section **104** writes the encrypted partial TS as a stream file **112** on the medium **110.** Then, the copyright information generating section **105** writes the output control information as an information file **113** on the medium **110** and the check value generating section **107** also writes the check value on the information file **113.** In this manner, the information storage device **110** writes the data of the content, along with the copyright control information, on the medium **110.**

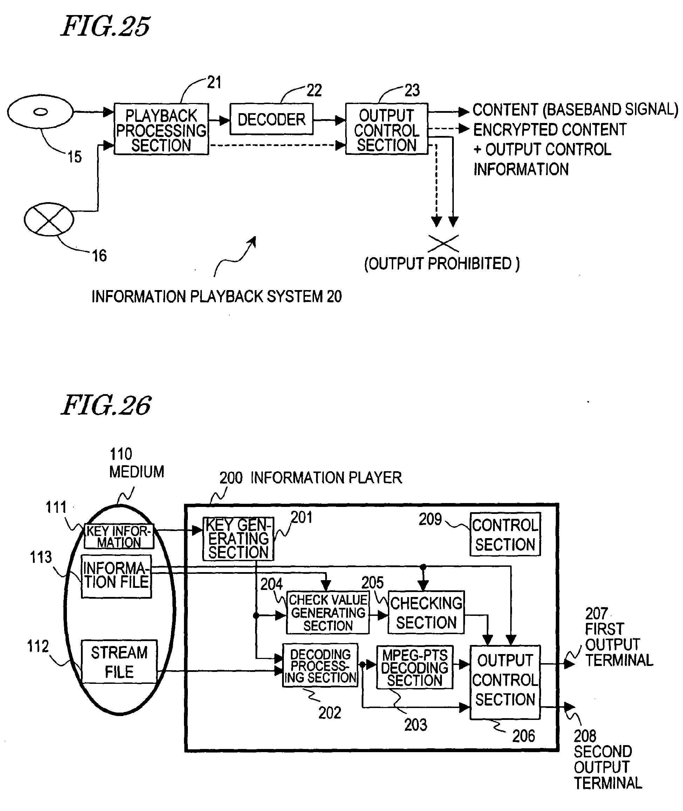

Hereinafter, the configuration and processing of an information playback system for playing back a content from the medium **110** will be described. FIG. **25** shows an arrangement of functional blocks in an information playback system **20** according to this preferred embodiment. The information playback system **20** can read digital data, representing a content, from a medium **15,** for example, and play back the content. Specific examples of the information playback systems **20** include a DVR system, an HDR system and so on that are similar to the information storage system **10.** The medium **15** is a medium that forms a part of the information storage system **10** and is supposed to store digital data (partial TS) representing a particular content.

The information playback system **20** includes a playback processing section **21,** a decoder **22** and an output control section **23.**

The playback processing section **21** reads a partial TS, representing a particular content, from the storage medium **15** or receives the partial TS over a network **16** such as the Internet. In playing back the content, the playback processing section **21** outputs the partial TS to the decoder **22** (as pointed by the solid arrow). On the other hand, in just outputting the partial TS without playing back the content, the playback processing section **21** outputs the partial TS to the output control section **23** directly (as pointed by the dashed arrow).

The decoder **22** gets and decodes the partial TS that has been compressed and encoded. Also, if the partial TS has been encrypted, then the decoder **22** decodes the encrypted TS.

By reference to the output control information stored in the partial TS, the output control section **23** determines whether the playback or output of that content is permitted or not. If it has been determined that the playback is permitted, then the output control section **23** outputs a baseband signal that can be played or reproduced on a player such as a video display device or an audio output device. The output control section **23** also determines, by reference to the output control information, whether the content may be output digitally or not. If it has been determined that the content may be output digitally, then the output control section **23** outputs an encrypted content. Optionally, depending on the specifications of the sender and receiver devices, not just the content but also the output control information may be output digitally by way of an IEEE 1394 interface, for example. The output control information may be exchanged digitally between devices produced by the same manufacturer, for example. It should be noted, however, that not every receiver device can interpret the output control information. Meanwhile, if the playback or output is prohibited, then the output control section **23** does not output the content data outside of the information playback system **20.**

Hereinafter, the configuration and operation of an information player in a situation where the information playback system 20 is implemented as the information player will be described with reference to FIG. **26.**

FIG. **26** shows an arrangement of functional blocks in an information player **200** according to this preferred embodiment. The information player **200** includes a key generating section **201,** a decoding processing section **202,** an MPEG-PTS decoding section **203,** a check value generating section **204,** a checking section **205,** an output control section **206,** a first output terminal **207,** a second output terminal **208,** and a control section **209.** It should be noted that the medium **110** is a removable medium that can be removed from the information player **200** and is not a component of the information player **200.** The information playback system **20** described above is made up of the information player **200** and the medium **110.**

The key generating section **201** generates a cryptographic key based on the key information **111** that is stored on the medium **110.** The decoding processing section **202** decodes the partial TS that has been encrypted and stored in the stream file **112** on the medium **110.** The MPEG-PTS decoding section **203** decodes the partial TS that has been compressed and encoded, thereby generating a baseband signal.

The check value generating section **204** generates a check value based on the key and the copyright control information included in the information file **113.** Following the example that has been described for the check value generating section **107** of the information storage device **100,** the check value generating section **204** reads the data to be checked **d1** and the check value **k** from the medium **110** and internally generates the same medium ID key **d2** as that generated by the information storage device **100.** Then, the check value generating section **204** substitutes the data to be checked **d1** and medium ID key **d2** into the unidirectional function **G,** thereby generating the check value **k.**

The checking section **205** compares the check value that has been generated by the check value generating section **204** with that stored in the information file **113.** If the copyright control information was altered and the data to be checked was changed into d1', then the check value would not be k but k'. That is why by comparing the check value **k** that has been read out from the medium **110** with the generated one, it can be determined whether or not the copyright control information or the check value has been altered. As described above, the medium ID key **d2** is managed strictly inside the device and it is very difficult to figure out d2 based on the copyright control information **d1** and the check value **k.** For that reason, it is very difficult to store the check value **k'** associated with the altered copyright control information **d1'** on the medium **110.**

The output control section **206** controls the output in accordance with the copyright control information and the result of check. The first output terminal **207** can output the partial TS in its original digital format and may be an IEEE 1394 terminal. On the other hand, the second output terminal **208** may output a baseband signal to play back the content and may be an NTSC terminal, for example.

The control section **209** controls the overall operation of the information player **200.** If the information storage device **100** is implemented as an optical disk recorder, then the control section **209** may be a central processing unit (CPU).

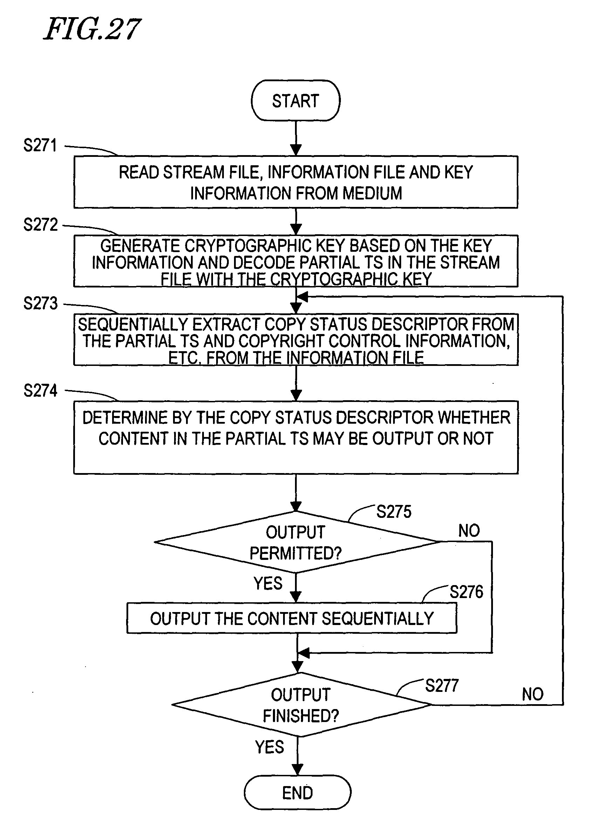

Hereinafter, the processing done by the information player **200** to play back a content from the medium **110** will be described. FIG. **27** shows the procedure of the playback processing done by the information player **200.** First, in Step **S271,** the information player **200** reads the key information **111,** stream file **112** and information file **113** from the medium **110.** In this processing step, the information player **200** also reads the device ID key (not shown) that is stored inside.

Next, in Step **S272,** the key generating section **201** generates a cryptographic key (i.e., a medium ID key) for use in encryption based on the key information **111** and the device ID key (not shown). Then, the decoding processing section **202** decodes the encrypted stream file **112** that is stored on the medium **110** (i.e., decodes the encrypted partial TS). Subsequently, in Step **S273,** the decoding processing section 202 sequentially extracts the copy status descriptor from the partial TS and the copyright control information from the information file **113**, respectively.

In parallel with this processing step, the MPEG-PTS decoding section **203** decodes the partial TS and extracts a baseband signal. In the meantime, the check value generating section **204** generates a check value based on the medium ID key and the copyright control information of the information file **113** that is stored on the medium **110** as well as the check value generating section **107.** The checking section **205** sees if the check value generated agrees with that stored in the information file **113.**

Next, in Step **S274,** the output control section **206** determines, by the contents of the copy status descriptor, whether the content in the partial TS may be output or not. As described above, the copy status descriptor is embedded in the partial TS.

More specifically, the output control section **206** performs the following processing. First, by checking the copy status descriptor, the output control section **206** determines the content to be played back is "copying permitted without restrictions", "EPN" or "no copying permitted anymore".

Also, by checking the output control flags of outputs 1 and 2 in the copy status descriptor, the output control section **206** determines whether or not the content may be output through the respective output terminals. As a result of this decision, the process branches in Step **S275.** That is to say, if the output is permitted, then the process advances to Step **S276.** Otherwise, the process advances to Step **S277.**

If it has been discovered as a result of the check made by the checking section **205** that the copyright control information stored on the medium **110** has been altered, then the output control section **206** may treat the content specified as "EPN" as "no copying permitted anymore". This process has the following advantage. Specifically, if the copyright control information of a content that has been specified as either "no copying permitted anymore" or "EPN" is altered into "copying permitted without restrictions", then the receiver device will take the received content for a non-encrypted one and will not perform the decoding process. As a result, the encrypted partial TS will be output as it is. This partial TS cannot be decoded and is virtually invalid data. Consequently, the copyright of the content can be protected.

In Step **S276,** the output control section **206** outputs the content sequentially. If it has been determined in Step **S275** that the output is not permitted (e.g., if a content provided by a digital broadcasting audio service has been recorded and if the flag of the output 1 (IEEE 1394 interface) is set as "output disabled"), then the content is not supplied to the first output terminal **207.**

Then, in Step **S277**, the output control section **206** determines whether the playback and output of the content (i.e., the output of the partial TS representing the content) is finished or not. If the answer is YES, the playback processing by the information player **200** ends. Otherwise, the process goes back to the processing step **S273** and the same processing steps are repeatedly carried out from that processing step on. It should be noted that the copyright control information in the copy status descriptor may sometimes change even within the same content. That is why the decision of the processing step **S275** may be made at regular intervals. For example, if the input sources are changed from "audio service" into "TV service" while a digital broadcast content is being recorded by the information storage device **100,** then the flag of the output 1 (IEEE 1394 interface) changes from output disabled into output enabled. If it has been determined in Step **S275** that the output is permitted, then the output control section **206** performs a control operation so as to output that portion of the content, of which the output is permitted, to the first output terminal 207.

In this manner, the information player **200** can play back the content stored on the medium **110** while guaranteeing appropriate copyright protection for that content.

If a digital data stream representing a partial TS is output through the second output terminal **208** without decoding the partial TS, then the copy status descriptor in the partial TS do not have to be decoded but the output control may be carried out based on only the copyright control information that has been read out from the information file **113.** A player that can decode a partial TS can usually decode the copy status descriptor in the partial TS. However, only if the data structure of the information file **113** can be analyzed, the processing of outputting the partial TS as a mere bit stream without decoding it may be carried out. Accordingly, even if the TS decoder is not provided or is not operated, the output control can also be done appropriately and conveniently. Even so, if the copy status descriptor in the partial TS can be interpreted, then the control may naturally be performed in accordance with the copy status descriptor.

In the preferred embodiment described above, it is determined as an exemplary output control whether the output through the output terminal is permitted or not. However, the object of the output control is not limited to that situation. Alternatively, the object of control may also be whether the information about an analog protection system (APS) or copy generation management system (CGMS) is applicable or not.

Also, in the preferred embodiment described above, the copyright control information is stored in the content by embedding the copy status descriptor in the partial TS. However, the present invention is in no way limited to that specific preferred embodiment. Alternatively, a header may be newly provided for an MPEG packet such that the copyright control information is stored in the header.

Furthermore, in the preferred embodiment described above, the check value is added to the information file 113. However, the check value may also be added to the stream file 112. For example, when copyright control information including the output control information is stored at a top portion of a packet of each partial TS, the content itself can be protected by cryptography even without encrypting the top portion. To prevent the copyright control information from being altered, however, the check value may be added. The check value may be calculated and the copyright control information may be checked for alternation just as described above.

In the example described above, rules that are set between requirements for copyright protection according to a service type and parameter values associated with the requirements have been set forth with reference to FIG. **19.** However, FIG. **19** is just an example and other rules are applicable as well. For example, FIG. **28** shows another example of the rules shown in FIG. **19.**

Unlike the rules shown in FIG. **19**, even if the value in the copy_control_type field of the digital copy control descriptor is "11", the content is recordable on a removable medium on some output conditions according to the rules shown in FIG. **28.**

Another difference will be pointed out. Specifically, if the value in the copy_control_type field is "11" and if the value in the digital_recording_control_data field of the digital copy control descriptor is "00" and if it is "copying permitted without restrictions", then the content is recordable on the medium without restrictions. The MPEG-TS processing section 103 (see FIG. 7) records a content on the medium **110** without encrypting the content. If the value in the digital_recording__control_data field of the digital copy control descriptor is "10" and if it is "copying permitted only one generation", then the MPEG-TS processing section 103 sets the copy control information on the removable medium into "no copying permitted anymore" and the output of the MPEG-TS during playback is prohibited. Meanwhile, if the value in the digital_recording_control_data field is "01" or "11", then the storage of the content data is prohibited.

As shown in FIG. **19,** if the copy_control_type of the digital copy control descriptor is "11", then a "copying permitted without restrictions" content may be output as an MPEG-TS but a "no copying permitted anymore" content may not be output as an MPEG-TS.

The copyright information generating section 105 can generate output control information by using the rules of output control about an input source (digital broadcast) as retained in the information storage device **100** and the values in the digital_recording_control_data and copy_control_type fields that are included in the input signal during recording.

The output control information thus generated is stored as an integral part of the copy status descriptor shown in FIG. **21(a)** or incorporated into a TS. The output control information may also be stored in the information file **113.** Their details are just as already described.

As can be seen, even by applying the rules shown in FIG. **28,** the information player **200** can also play back the content from the medium **110** appropriately, or output the digital data representing the content, according to the type of the input source while protecting its copyright.

### EMBODIMENT 2

An information storage device that realizes copyright protection on high-definition video will be described as a second specific preferred embodiment of the present invention.

In this preferred embodiment, an example in which the information storage device locates the source of an input signal and generates output control information according to the type of the source will be described.

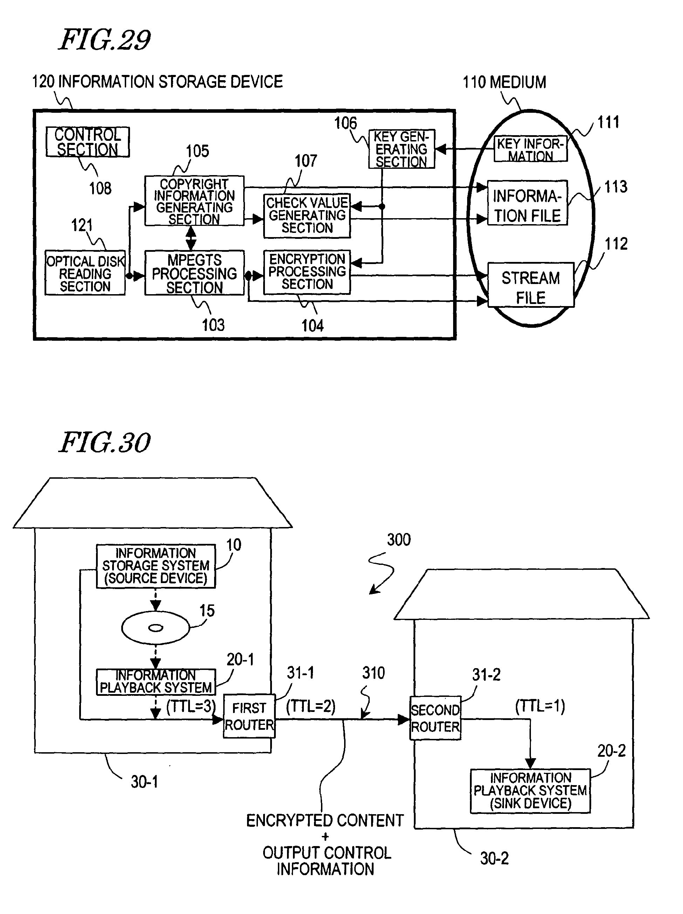

FIG. **29** shows an arrangement of functional blocks in an information storage device **120** according to this preferred embodiment. The information storage device **120** can process high-definition video at its input and output. For that purpose, the information storage device **120** adds copyright control information so as to permit outputting high-definition video only in a format that guarantees copyright protection and stores a data stream on the medium. The information storage device **120** includes an optical disk reading section **121,** the MPEG-TS processing section **103,** the encryption processing section **104,** the copyright information generating section **105,** the key generating section **106,** the check value generating section **107** and the control section **108.** Any component having the same function as the counterpart of the information storage device **100** shown in FIG. **7** is identified by the same reference numeral and the description thereof will be omitted herein.

The optical disk reading section **121** is loaded with an optical disk ROM medium (not shown) in which high definition video data stream is stored. This optical disk ROM medium may be a read-only Blu-ray Disc or HD-DVD, for example.

Generally speaking, a content stored on an optical disk ROM medium has been encrypted to deter illegal playback and illegal duplication. Only a device that has been licensed by a content protection system using cryptography can decode the encrypted content. If rules of output, copying and so on have been set as licensing conditions, then a licensee device must have processing functions so as to meet those rules.

The optical disk reading section **121** identifies a given optical disk ROM medium. If the content stored on the medium has been encrypted following the licensing conditions, then the optical disk reading section **121** decodes the content into a decrypted data stream.

The information storage device **120** instructs the optical disk reading section **121** to read out the decrypted data stream from the optical disk ROM medium and to store it on the medium **110** on which high-definition video can be stored. In this case, the information storage device **120** generates copyright control information and writes it on the medium **110** along with the data stream such that analog output of the high-definition video is prohibited but only digital output thereof is permitted in accordance with the output rules that were set as licensing conditions. Only the digital output is permitted because digital data could have its copyright protected by utilizing cryptographic technologies.

In writing the data stream, which has been stored on the optical disk ROM medium, on the medium **110,** the copyright information generating section **105** generates output control information that makes analog video "output disabled" and digital video "output enabled", respectively.

The analog video may be output through a pin terminal (i.e., a composite signal output), an S terminal, D1 through D5 terminals, or an RGB component terminal, for example. Meanwhile, the digital video may be output through a high-definition multimedia interface (HDMI), a digital visual interface (DVI), an IEEE 1394 interface, a USB port, an Ethernet port, or an xDSL port.

As digital data encryption technologies, High-bandwidth Digital Content Protection (HDCP) for DVI and HDMI and IP-transmitting DTCP compliant with the IEEE 1394, USB, Ethernet or xDSL are known.

Optionally, the copyright information generating section **105** may change the contents of the output control information according to the resolution of the video. For example, even analog video may be output at a standard resolution (i.e., as interlaced video with 480 horizontal scan lines or progressive video) but may not be output at a resolution exceeding the standard resolution. As used herein, the "resolution exceeding the standard resolution" may be that of the output (at a D3 terminal) of interlaced video (1080i) with 1,080 horizontal scan lines, the output (at a D4 terminal) of progressive video (720p) with 720 horizontal scan lines, or the output (at a D5 terminal) of progressive video (1080p) with 1,080 horizontal scan lines.

Furthermore, the copyright information generating section **105** may also generate output control information in which only an output compliant with a copy generation control technology called "Copy Generation Management System-Analog (CGMS-A)" and/or only analog video associated with the output of a Macrovision signal are "output enabled" following the output rules that were set as licensing conditions. As used herein, the "Macrovision signal" is known as an analog copy control signal (which is called an "AGC (automatic gain control)" or "Corol Stripes") licensed by Macrovision Corporation.

It should be noted that depending on the recording format of the optical disk ROM medium, the MPEG-TS processing section **103** may be omitted altogether or its processing may be simplified. Also, if the recording format of the optical disk ROM medium that has been inserted into the optical disk reading section **121** is MPEG-PS (i.e., MPEG program stream), then the MPEG-PS needs to be converted into a TS. Various types of processing for converting an MPEG-PS into a TS have been developed and are already well-known in the art, and the description thereof will be omitted herein.

Thus, in the second preferred embodiment described above, the optical disk reading section **121** recognizes the types of the given ROM disk (including the disk type and the type of content protection) and the copyright information generating section **105** generates output control information following the licensing rules according to the types of the ROM disk and stores it, along with the content, on the medium **110.** In this manner, appropriate copyright protection is realized according to the source of the given content.

In the second preferred embodiment, an example of generating output control information following associated rules by identifying a given optical disk ROM medium has been described. However, similar effects are achieved on a different type of source, too. Suppose a cable TV has a contract term that programs on a particular channel may not be provided as analog output but may be output digitally under the protection of DTCP or HDCP, for example. In that case, the output control section **14** or copyright information generating section **105** of information storage device including a cable TV receiver can generate output control information according to the selected channel and in accordance with the rules of that channel. By storing this output control information on the medium, appropriate copyright protection is realized according to the source of the given content.

It should be noted that the cable TV broadcasting, satellite and terrestrial digital broadcasting in Japan, and satellite and terrestrial digital broadcasting in the United States and other countries are provided by broadcasters following broadcasting operating rules that were set by various standard setting organizations. That is why the copyright information generating section 105 may identify the transmitting country and the broadcasting type of a given data stream and locate its input source by getting information (e.g., broadcaster code) showing which broadcasting operating rules the broadcast follows from the data stream and identifying the broadcasting system. Also, if the broadcasting system adopts a limited reception system using cryptography, for example, then the receiver needs to be provided with a decoding algorithm and key, which are needed for decoding purposes, in accordance with the licensing contract of the limited reception system. As a result, the output control section **14** or copyright information generating section **105** of the information storage device can generate output control information in accordance with the licensing rules of the identified broadcasting system and its limited reception system. Then, by storing the output control information on the medium, appropriate copyright protection is realized according to the source of the content.

### EMBODIMENT 3

In the first and second preferred embodiments described above, the information storage device stores a data stream, representing a content, on the medium **110.** However, if the data stream representing the content may be output to an information player that is connected to a home network, for example, then the user can view and listen to the content that is output digitally without debasing its quality just like when the content is recorded on the medium **110,** which is convenient for him or her. Nevertheless, if the data stream is output unlimitedly to a public network such as the Internet beyond the home network, then appropriate copyright protection cannot be guaranteed anymore.

Thus, a transmission system for realizing copyright protection even when a digital data stream representing a content is output to an information player over a network will be described as a third preferred embodiment of the present invention.

FIG. **30** shows a configuration of a transmission system **300** according to this preferred embodiment. The transmission system **300** includes a source site **30-1** for transmitting a data stream representing a content and a sink site **30-2** for receiving the data stream, which are linked together over a network **310.**

The transmission system **300** is compliant with the DTCP and can transmit a content over an IP (Internet protocol) network. The IP network usually connects worldwide network terminals together. However, according to the DTCP standard, a data stream representing a content may be transmitted to only a limited range. Thus, in this preferred embodiment, a data stream representing a content is controlled so as to be transmitted to only a particular range.

Specifically, the control is realized as follows. First, the source site **30-1** includes at least an information storage system **10** and a first router **31-1.** The information storage system **10** is just as already described for the first preferred embodiment and can record a content on the medium **15.** The content may be played back from the medium **15** and output to an external device by an information playback system **20-1.** Alternatively, instead of recording the content on the medium **15,** the information storage system **10** may encrypt the data stream representing the content and output it to the external device. In this preferred embodiment, the latter example will be described. Since the data stream representing the content is output from the information storage system **10,** the information storage system **10** is called a "source device".

In FIG. **30,** the first router **31-1** is supposed to receive the data stream directly from the information storage system **10.** At this point in time, following the rule that the output is permitted to DTCP that transmits it to only a particular range, output control information that permits output to DTCP that transmits it to only a particular range is generated. Such output control information is described in the copy status descriptor to be embedded in the data stream and that output control information may be output separately.

The information storage system **10** sets the value of time to live (TTL, which is a packet life time) to three in outputting the data stream representing the content. In this preferred embodiment, this TTL is used to limit the transmission of the content data stream to the particular range and is provided within the IP header of each packet in which the content data to be transmitted is stored. It is already well known in the art exactly where in the IP header the TTL should be stored and what value should be set, and the detailed description thereof will be omitted herein.

Every time a packet passes a router, the TTL value is decremented by one by the router. And when the TTL value reaches zero, the router discards that packet. At that time, the router returns a packet, notifying that the packet has been discarded, to the sender. Generally speaking, two devices that pass a plurality of routers are likely to be located far away from each other. Accordingly, by setting TTL to be a relatively small value, the packet's reach can be limited to a narrow range. In this preferred embodiment, since the TTL value is set to three, it is possible to prevent the packet from being transmitted broadly over a public network. According to the DTCP, the transmission range of a content can be limited by not only using the TTL but also using a round trip time (RTT, which is an amount of time it takes for a packet to make a round trip). Thus, in the following example, a method for limiting the transmission range by using a TTL will be described first, and then a method for limiting the transmission range by using an RTT will be described.

In FIG. **30,** after the TTL has been set to two by the first router **31-1,** the content is output to the network **310.** Not only the encrypted content but also output control information are output. The encrypted data stream representing the content and the output control information soon reach the sink site **30-2.**

The sink site **30-2** includes a second router **31-2** and an information playback system **20-2.** The second router **31-2** receives the encrypted data stream and the output control information over the network **310,** and then determines whether the TTL is equal to zero or not. Since the TTL is currently equal to two, not zero, the second router decrements the TTL by one to one and then sends the packet to the information playback system **20-2.** In response, the information playback system **20-2** plays back the content based on the data stream received.

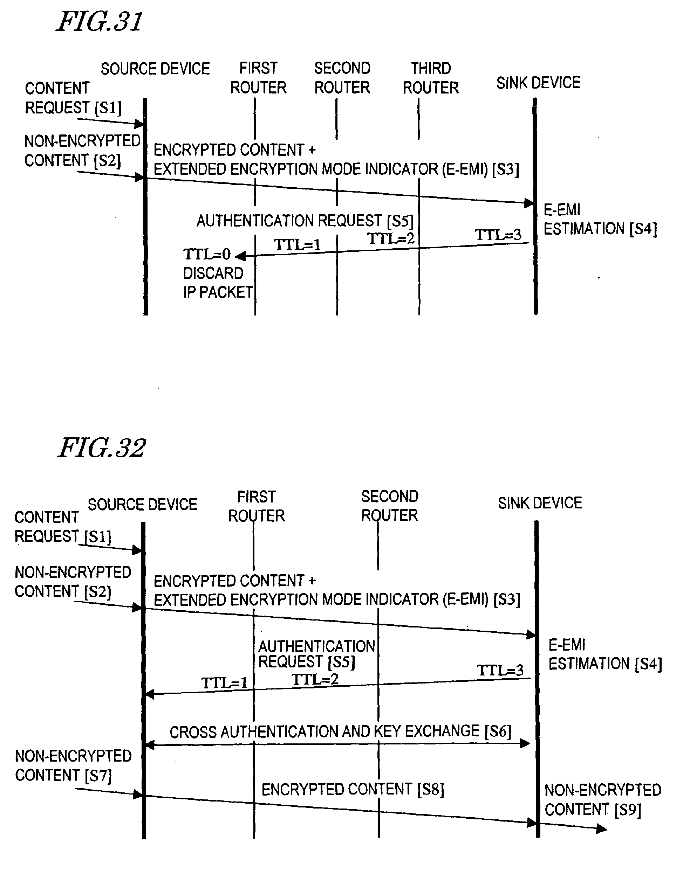

FIGS. **31** and **32** show DTCP processing according to the IP. The transmission system **300** just described with reference to FIG. **30** is supposed to set a TTL for each packet of a given content. However, a huge number of transport packets are usually included in a content. Thus, a process that can lighten the router's TTL load by setting a TTL for a packet other than the transport packets of a given content will be described with reference to FIGS. **31** through **33.**

First, FIG. **31** shows an example in which the content cannot be decoded or played back due to TTL constraints. According to the DTCP, first, a source device accepts a content request in S1 shown in FIG. **31.** The source device corresponds to the information storage system **10** of the source site **30-1** in the example shown in FIG. **30.**

The source device receives a non-encrypted content in S2, encrypts the data of that content, and then sends the data, along with the extended encryption mode indicator (E-EMI) of the packet, to an IP network in S3. A sink device estimates the encryption state of the E-EMI of the received content (e.g., copying permitted without restrictions, no copying permitted anymore, copying permitted only one generation or copying prohibited), and judges that the packet has been encrypted in S4 unless the E-EMI is "copying permitted without restrictions". In the example shown in FIG. **30,** the sink device corresponds to the information playback system **20** of the sink site **30-2.**

If the content data has been encrypted, then it is necessary to get the key. That is why the source device and the sink device authenticate each other to confirm that the counterpart is a DTCP compliant device.

The cross authentication is done by storing an authentication and key exchange (AKE) command in an IP packet and executing the AKE command. In making the cross authentication, first, the sink device issues an authentication request packet in S5. Specifically, the sink device sends a random number using the CHALLENGE sub-function of the AKE command to the source device. In this case, the sink device sets the TTL of the IP packet, in which the AKE command is stored, to three. If three or more routers should be passed until the command packet reaches the counterpart device, then the TTL becomes equal to zero and the packet is discarded. In that case, the AKE command cannot be executed, and the sink device cannot get the cryptographic key and cannot play back the content, either. In FIG. **31,** the IP packet issued by the sink device decrements its TTL by one when passing the third router and then the second router. And when the packet passes the first router, TTL becomes equal to zero. Thus, the packet is discarded by the first router. As a result, the authentication request packet issued by the sink device does not reach the source device and the cross authentication cannot be done. Consequently, the content data cannot be played back unlimitedly and the copyright of the content can be protected.

FIG. **32** shows an example in which an encrypted content can be decoded and played back. In FIG. **32,** the same processing steps as those shown in FIG. **31** are carried out until S4.

In the example shown in FIG. **32,** there are only two routers between the source and sink devices. That is why even if the TTL value is initially set to be three, its value never becomes equal to zero between the source and sink devices. That is to say, the authentication request packet issued by the sink device does reach the source device in S5 by way of the second and first routers. When reaching the source device, the TTL of the IP packet is equal to one and that packet is never discarded during the transmission.

On receiving this authentication request, the source device checks the TTL of the IP packet. If the TTL value stored is greater than three, then the source device will not execute AKE by judging the device that issued the AKE command as an unauthorized device. On the other hand, if the TTL value is three or less, then the source device returns an IP packet as an authentication response (i.e., response to the AKE command) to the sink device. In that case, the TTL is also set to be three. This response reaches the sink device by way of the first and second routers. Thereafter, the source device also issues a predetermined AKE command to the sink device to authenticate each other.

When the cross authentication is done, the key is exchanged (i.e., a content key is passed to the sink device) to end the cross authentication and key exchange in S6. After that, a non-encrypted content is input to the source device in S7 and DTCP encrypted and transmitted to the sink device in S8. The sink device decodes the DTCP code with the content key that has been got in S6, thereby getting the non-encrypted content in S9. As a result, the sink device can play back the non-encrypted content.

By defining the range of the device, with which the DTCP key is exchanged, through these processing steps, the transmission range of the content can be limited. The TTL is essentially one of the functions of an IP router. Accordingly, when such a method for limiting the transmission range by using the TTL is adopted, the processing load can be a lot lighter. In the example described above, TTL is supposed to be equal to three. However, this is just an example and the range can be limited using an arbitrary number of 1 through 255.

Next, a method for limiting the transmission range by using a round trip time (RTT), which is an amount of time it takes for a packet to make a round trip, will be described. That is to say, the RTT is a period of time that passes after a predetermined command has been transmitted from one device to another device and before its response returns. If there are routers and other intervening devices between the devices, then the RTT becomes longer as the number of those intervening devices increases. Accordingly, if the RTT has a small value, the devices are likely located close to each other.

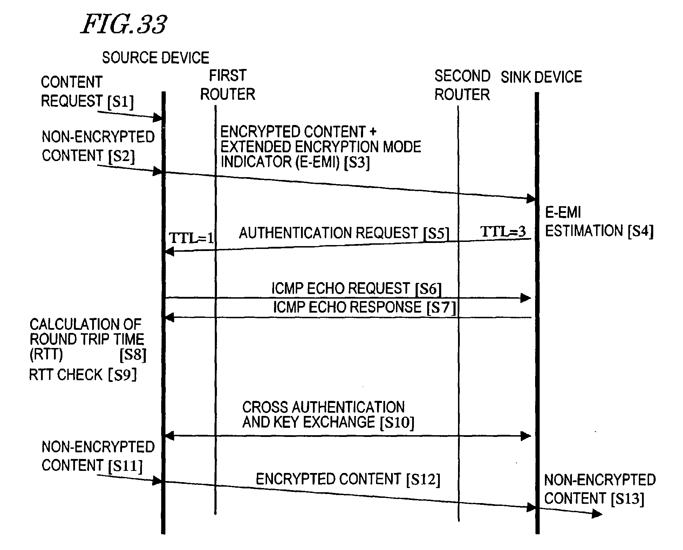

FIG. **33** shows an exemplary procedure of processing to be done when the RTT is used. S1 through S4 are the same as those shown in FIGS. **31** and **32** and the description thereof will be omitted herein. When the E-EMI has been estimated in S4, the sink device will make an authentication request in S5. On receiving the AKE command as the authentication request, the source device sends an ICMP echo request, which is defined by the Internet Control Message Protocol, to the sink device in S6. The ICMP packet transmitted passes a number of routers (e.g., first and second routers in FIG. 33) and then arrives at the sink device. In response, the sink device makes an ICMP echo response packet and returns it to the source device in S7.

The source device receives the response packet, figures out the RTT by calculating the difference between transmission and reception times in S8, and then checks the value of the RTT in S9. If the RTT value is equal to or greater than a predetermined value (e.g., 10 ms), the source device will not perform the cross authentication after that. Then, the sink device will not be able to get the cryptographic key in that case. On the other hand, if the RTT value is less than the predetermined value, then the source device also issues a predetermined AKE command to the sink device to make cross authentication. When the cross authentication is done, the key is exchanged (i.e., a content key is passed to the sink device) to end the cross authentication and key exchange in S10. After that, a non-encrypted content is input to the source device in S11 and DTCP encrypted and transmitted to the sink device in S12. The sink device decodes the DTCP code with the content key that has been got, thereby getting the non-encrypted content in S13. As a result, the sink device can play back the non-encrypted content.

By defining the range of the device, with which the DTCP key is exchanged, through these processing steps, the transmission range of the content can be limited.

If the process using the TTL and the process using the RTT are combined, then the reliability of the content protection can be increased. For example, in S5 shown in FIG. 33, the authentication request packet may be sent with TTL = 3. Then, in the environment shown in FIG. 31, there are three or more routers between the sink and source devices, and therefore, TTL becomes equal to zero and the packet is discarded. If the control needs to be performed using the RTT only, then the TTL may be set to a sufficiently large value (e.g., 255).

Furthermore, by using the TTL, the content can be transmitted between the source device and a particular sink device without depending on the number of intervening routers.

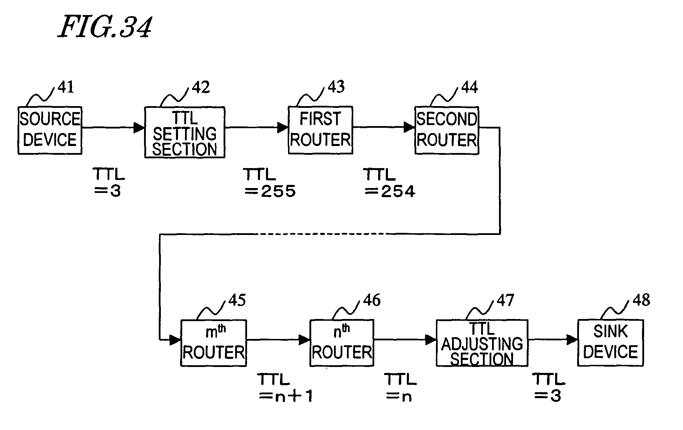

FIG. **34** shows a transmission system including a TTL setting section **42** and a TTL adjusting section **47.** A content is transmitted from a source device **41** to a sink device **48.** Between them, a first router **43**, a second router **44**, ... an m^{th} router **45** and an n^{th} router **46** are provided. Accordingly, if this transmission system limits the transmission range of the IP packet by setting TTL equal to three, then the IP packet cannot be transmitted between the source and sink devices **41** and **48.**

That is why the TTL setting section **42** is arranged between the source device **41** and the first router **43,** and the TTL adjusting section **47** is arranged between the last router **46** and the sink device **48.** The TTL setting section **42** may be provided within the same site as the source device **41** (e.g., within the source site **30-1** shown in FIG. 30). And the TTL adjusting section **47** may be provided within the same site as the sink device **48** (e.g., within the sink site **30-2** shown in FIG. 30).

The TTL setting section **42** changes the TTL setting of the IP packet, which has just been transmitted from the source device, into 255. Meanwhile, the TTL adjusting section **47** sets the TTL of the IP packet, which was transmitted toward the source device **48,** equal to three. As a result, the range limitation by the TTL can be avoided. This technique is effectively applicable to a situation where a person that has got a content legally wants to view and listen to the content at a distant terminal, for example.

However, if the TTL setting section **42** and the TTL adjusting section **47** were provided without restrictions, then the content could be transmitted to any sink device. That is why some measure needs to be taken. For example, a sink device with a particular IP address may be registered in advance such that the TTL setting section **42** and TTL adjusting section **47** perform the processing only on an IP packet that is going to be transmitted toward the registered sink device. It should be noted that the transmission range can be limited by using the RTT in this case, too. Since the RTT needs to be calculated based on the transmission and reception times of the ICMP packet, a heavy processing load is imposed on the device. In any case, however, the processing is carried out inside the source or sink device, and it is difficult to perform any illegal activity using an external device. That is why by not only providing the TTL setting section **42** and TTL adjusting section **47** but also performing the processing using the RTT, the reliability of content protection can be increased.

The information processing system described above (i.e., the information storage system **10** and/or the information playback system **20)** includes a computer. And the processing described above is realized by getting a prestored computer program executed by each computer. For example, in the information storage device **100,** the control section **108** is a computer. And in the information player **200,** the control section **209** is a computer. The processes done by the information storage device **100** and information player **200** are realized by making their control sections execute computer programs defining the processing procedures shown in FIGS. **24** and **27,** for example. That is to say, by executing such a computer program, each computer operates the respective components of the device and performs the processing described above. The computer program may be circulated on the market by being stored on a storage medium such as a CD-ROM or downloaded over telecommunications lines such as the Internet. As a result, even a computer system can also operate as a player with the same functions as the data processor described above.

### INDUSTRIAL APPLICABILITY

According to the present invention, the recorder generates information for controlling the output of a content to be recorded according to the input source of the content and writes the information on the medium on which the content is stored. The player has only to output the content in accordance with that information. Thus, there is no need to consider the input source in outputting the content. As a result, the processing load on the player can be reduced and appropriate copyright protection is realized.

## Claims

1. An information processing system that is able to record a content on a medium, the system comprising:
a stream getting section for getting a data stream representing the content; and
a recording processing section for generating output control information and writing the data stream and the output control information on the medium, the output control information defining an appropriate output method, which is compatible with the output format of the content, following a rule that defines what type of processing should be done according to the type of input source of the content and the output format of the content and in accordance with source related information on the input source of the content.

2. The information processing system of claim 1, wherein the stream getting section gets a data stream including the source related information.

3. The information processing system of claim 2, wherein the recording processing section gets the source related information that includes copyright control information of the content and/or source information that shows the type of the input source, and
wherein the copyright control information is used to control at least one of the processing of recording the content and the processing of outputting the recorded content.

4. The information processing system of claim 3, wherein the recording processing section gets the source related information including the copyright control information, the copyright control information including recording control information for controlling recording of the content and/or output control information showing whether the content may be output or not.

5. The information processing system of claim 1, wherein the recording processing section gets source information, which shows the type of the input source by an acquisition route of the data stream, as the source related information.

6. The information processing system of claim 5, wherein the stream getting section receives the data stream as a broadcast, and
wherein the recording processing section finds the acquisition route of the data stream by the channel of the broadcast received.

7. The information processing system of claim 6, wherein the recording processing section finds the acquisition route of the data stream by information identifying a broadcasting system.

8. The information processing system of claim 5, wherein the stream getting section gets the data stream from a content storage medium, which is different from the medium and on which the content is stored, and
wherein the recording processing section finds the acquisition route of the data stream by the type of the content storage medium.

9. The information processing system of claim 1, wherein the recording processing section generates a stream file, in which the data stream is stored, and an information file, in which the output control information is stored, for the medium.

10. The information processing system of claim 1,
wherein the recording processing section describes the output control information in the data stream and generates a stream file, in which the data stream is stored, and an information file, in which the output control information is stored, for the medium.

11. The information processing system of claim 1, wherein the data stream received includes control information that defines how to output the content, and
wherein the recording processing section further generates different pieces of output control information for respective portions of the content in accordance with the control information.

12. The information processing system of claim 11, wherein the recording processing section describes those pieces of output control information for the respective portions of the content within the data stream and generates a stream file, in which the data stream is stored, for the medium, and
wherein when describing output control information that prohibits output, the recording processing section generates an information file, in which the output control information that prohibits output is stored, for the medium.

13. The information processing system of claim 1, wherein the data stream received includes control information that defines how to output the content, and
wherein if the control information includes a portion that prohibits outputting the content, the recording processing section generates output control information that prohibits outputting the entire content.

14. The information processing system of claim 1, wherein the recording processing section further generates checking data based on information unique to the medium and the output control information, and writes the checking data on the medium.

15. The information processing system of claim 1, wherein the content is an audio content, and
wherein the recording processing section retains a rule that defines what type of processing should be done according to the output mode of the audio content.

16. A method of recording a content on a medium, the method comprising the steps of:
getting a data stream representing the content;
generating output control information, the output control information defining an appropriate output method, which is compatible with the output format of the content, following a rule that defines what type of processing should be done according to the type of input source of the content and the output format of the content and in accordance with source related information on the input source of the content; and
writing the data stream and the output control information on the medium.

17. A computer program to be executed by an information processing system for recording a content on a medium, the program being defined so as to make the information processing system, executing the computer program, perform the steps of:
getting a data stream representing the content;
generating output control information, the output control information defining an appropriate output method, which is compatible with the output format of the content, following a rule that defines what type of processing should be done according to the type of input source of the content and the output format of the content and in accordance with source related information on the input source of the content; and
writing the data stream and the output control information on the medium.
